# EUROPEAN PATENT APPLICATION

(11) **EP 4 322 418 A1**
(43) Date of publication of application: **14.02.2024**
(21) Application number: 22783988.3
(22) Date of filing: 02.04.2022
(51) Int. Cl.: H04B 7/0456, H04L 1/00, H04L 1/18, H04L 5/00

(54) **CODEBOOK DETERMINATION AND RECEIVING METHODS AND APPARATUSES, TERMINAL AND NETWORK SIDE DEVICE**

(30) Priority: 06.04.2021 CN 202110368459
(71) Applicant: Vivo Mobile Communication Co., Ltd., Dongguan, Guangdong 523863 (CN)
(72) Inventor: ZENG, Chaojun, Dongguan, Guangdong 523863 (CN)
(74) Representative: Winter, Brandl - Partnerschaft mbB
(86) International application number: PCT/CN2022/085038
(87) International publication number: WO 2022/213922

(57) **Abstract**

This application discloses a codebook determination method and apparatus, a codebook reception method and apparatus, a terminal, and a network-side device, and pertains to the field of communications technologies. The codebook determination method in embodiments of this application includes: determining, by a terminal, a candidate transmission occasion set based on a bundling granularity, where the bundling granularity is used for determining a correspondence between physical downlink shared channel PDSCHs and PDSCH bundling groups; and determining, by the terminal, a hybrid automatic repeat request acknowledgement HARQ-ACK bit sequence based on the candidate transmission occasion set.

## Description

### CROSS-REFERENCE TO RELATED APPLICATIONS

This application claims priority to Chinese Patent Application No. 202110368459.7, filed in China on April 6, 2021, which is incorporated herein by reference in its entirety.

### TECHNICAL FIELD

This application pertains to the communication field, and in particular, relates to a codebook determination method and apparatus, a codebook reception method and apparatus, a terminal, and a network-side device.

### BACKGROUND

During organization of a hybrid automatic repeat request acknowledgement (Hybrid automatic repeat request acknowledgement, HARQ-ACK) bit sequence that needs to be reported at a specific feedback moment, user equipment (User Equipment, LTE, also referred to as terminal) determines a correspondence between each downlink PDSCH reception and a specific bit in the organized HARQ-ACK bit sequence according to a preset rule and based on a scheduling status of downlink physical downlink shared channel (Physical Downlink Shared Channel, PDSCH) receptions on one or more carriers, for which HARQ-ACKs need to be reported at the feedback moment, and such operation is referred to as HARQ-ACK codebook construction or HARQ-ACK codebook scheme. In new radio (NR) Rel-15, two HARQ-ACK codebook schemes are adopted: semi-static codebook (Type-1) and dynamic codebook (Type-2).

The semi-static codebook is constructed based on possible PDSCH reception occasions. Based on a feedback timing configuration table (that is, K1 sets configured by higher layer) and HARQ-ACK feedback moments (which are uplink slots for semi-static codebook transmissions), a corresponding HARQ-ACK bit is reserved for each possible PDSCH reception occasion (which is determined based on a time domain resource assignment table (Time Domain Resource Assignment Table, TDRA Table) configured by higher layer). If the UE does not actually receive/detect a corresponding PDSCH for a specific PDSCH reception occasion, its corresponding HARQ-ACK bit is set to NACK; otherwise, a corresponding HARQ-ACK bit is set based on a decoding result of the PDSCH.

During research on 52.6-71 GHz features in Rel-17, it has been determined that new subcarrier spacings (Subcarrier Spacing, SCS) including 480 kHz and 960 kHz need to be introduced for new NR deployment bands. For the newly introduced SCSs, physical downlink control channel (Physical Downlink Control Channel, PDCCH) monitoring needs to be adjusted or enhanced accordingly, for example, to avoid the UE from monitoring the PDCCH in every slot (which is a very short duration), thereby reducing complexity of UE implementation. Correspondingly, to fully utilize time domain resources of carriers, multi-PDSCH (Multi-PDSCH) scheduling and multi-physical uplink shared channel (Multi-PUSCH) scheduling need to be developed or introduced.

Multi-PDSCH scheduling means that a single piece of downlink control information (Downlink Control Information, DCI) can schedule multiple PDSCH receptions on the same carrier at one time. According to NR protocols, these PDSCHs do not overlap in time domain.

However, when multi-PDSCH scheduling is supported, the solution for semi-static HARQ-ACK codebook feedback in the prior art has problems of relatively complex codebook construction procedure and relatively large feedback overheads.

### SUMMARY

Embodiments of this application provide a codebook determination method and apparatus, a codebook reception method and apparatus, a terminal, and a network-side device, which can resolve the problems of relatively complex codebook construction procedure and relatively large feedback overheads in the solution for semi-static HARQ-ACK codebook feedback for multi-PDSCH scheduling in the prior art.

According to a first aspect, a codebook determination method is provided, including:
determining, by a terminal, a candidate transmission occasion set based on a bundling granularity, where the bundling granularity is used for determining a correspondence between physical downlink shared channel PDSCHs and PDSCH bundling groups; and
determining, by the terminal, a hybrid automatic repeat request acknowledgement HARQ-ACK bit sequence based on the candidate transmission occasion set.

According to a second aspect, a codebook determination apparatus is provided, including:
a first determining module, configured to determine a candidate transmission occasion set based on a bundling granularity, where the bundling granularity is used for determining a correspondence between physical downlink shared channel PDSCHs and PDSCH bundling groups; and
a second determining module, configured to determine a hybrid automatic repeat request acknowledgement HARQ-ACK bit sequence based on the candidate transmission occasion set.

According to a third aspect, a terminal is provided, where the terminal includes a processor, a memory, and a program or instructions stored in the memory and capable of running on the processor, and when the program or the instructions are executed by the processor, the steps of the method according to the first aspect are implemented.

According to a fourth aspect, a terminal is provided, including a processor and a communication interface, where the processor is configured to determine a candidate transmission occasion set based on a bundling granularity, where the bundling granularity is used for determining a correspondence between physical downlink shared channel PDSCHs and PDSCH bundling groups; and determine a hybrid automatic repeat request acknowledgement HARQ-ACK bit sequence based on the candidate transmission occasion set.

According to a fifth aspect, a codebook reception method is provided, including:
receiving, by a network-side device, a hybrid automatic repeat request acknowledgement HARQ-ACK bit sequence; and
parsing, by the network-side device, the received HARQ-ACK bit sequence; where
the HARQ-ACK bit sequence is determined by a terminal based on a candidate transmission occasion set that is determined based on a bundling granularity.

According to a sixth aspect, a codebook reception apparatus is provided, including:
a receiving module, configured to receive a hybrid automatic repeat request acknowledgement HARQ-ACK bit sequence; and
a parsing module, configured to parse the received HARQ-ACK bit sequence; where
the HARQ-ACK bit sequence is determined by a terminal based on a candidate transmission occasion set that is determined based on a bundling granularity.

According to a seventh aspect, a network-side device is provided, including a processor, a memory, and a program or instructions stored in the memory and capable of running on the processor, and when the program or the instructions are executed by the processor, the steps of the method according to the fifth aspect are implemented.

According to an eighth aspect, a readable storage medium is provided, where a program or instructions are stored in the readable storage medium, and when the program or the instructions are executed by a processor, the steps of the method according to the first aspect or the fifth aspect are implemented.

According to a ninth aspect, a chip is provided, where the chip includes a processor and a communication interface, the communication interface is coupled to the processor, and the processor is configured to run a program or instructions to implement the steps of the method according to the first aspect or the fifth aspect.

According to a tenth aspect, a computer program/program product is provided, where the computer program/program product is stored in a storage medium, and the computer program/program product is executed by at least one processor to implement the steps of the method according to the first aspect or the fifth aspect.

According to an eleventh aspect, a communication device is provided, configured to execute the steps of the method according to the first aspect, or configured to execute the steps of the method according to the fifth aspect.

In the embodiments of this application, during multi-PDSCH scheduling, the candidate transmission occasion set is determined based on the bundling granularity and then the HARQ-ACK bit sequence is determined based on the candidate transmission occasion set. Such HARQ-ACK semi-static codebook determination manner simplifies a codebook construction procedure and also reduces feedback overheads.

### BRIEF DESCRIPTION OF DRAWINGS

FIG. 1 is a block diagram of a wireless communication system to which the embodiments of this application are applicable;
FIG. 2 is a schematic flowchart of a codebook determination method according to an embodiment of this application;
FIG. 3 is a schematic diagram of multi-PDSCH scheduling and HARQ-ACK feedback on a single PUCCH;
FIG. 4 is a schematic diagram of multi-PDSCH scheduling and HARQ-ACK feedback on multiple PUCCHs;
FIG. 5 is a schematic modular diagram of a codebook determination apparatus according to an embodiment of this application;
FIG. 6 is a structural block diagram of a terminal according to an embodiment of this application.
FIG. 7 is a schematic flowchart of a codebook reception method according to an embodiment of this application;
FIG. 8 is a schematic modular diagram of a codebook reception apparatus according to an embodiment of this application;
FIG. 9 is a structural block diagram of a network-side device according to an embodiment of this application; and
FIG. 10 is a structural block diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, a first object may be one or multiple. In addition, "and/or" in this specification and claims indicates at least one of connected objects, and the symbol "/" generally indicates that the associated objects are in an "or" relationship.

It should be noted that technologies described in the embodiments of this application are not limited to a long term evolution (Long Term Evolution, LTE)/LTE-advanced (LTE-Advanced, LTE-A) system, and may also be used in various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

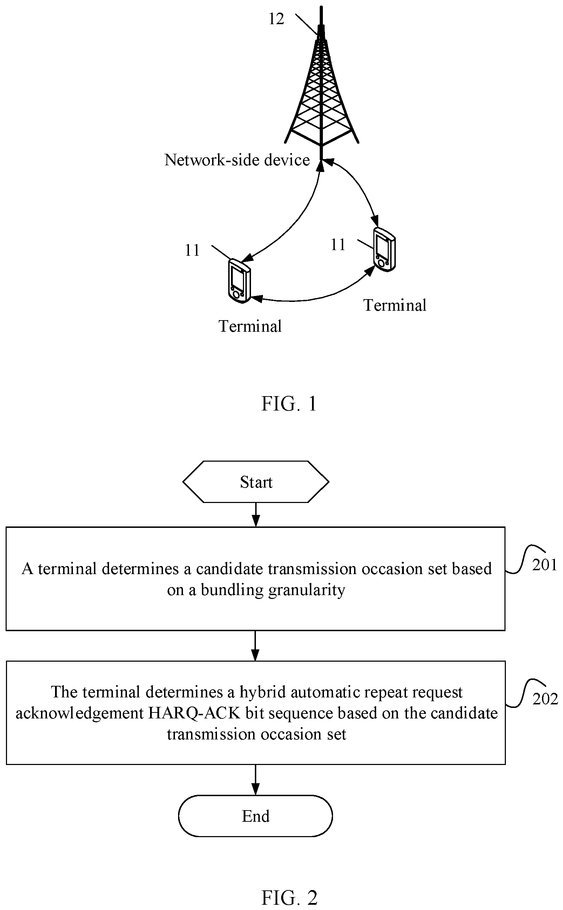

FIG. 1 is a block diagram of a wireless communication system to which the embodiments of this application are applicable. The wireless communication system includes a terminal 11 and a network-side device 12. The terminal 11 may also be referred to as a terminal device or user terminal (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VLTE), or pedestrian user equipment (PUE). The wearable device includes: a smart watch, a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a Wi-Fi node, a transmission and reception Point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

With reference to the accompanying drawings, the following describes in detail, by using some embodiments and application scenarios thereof, a codebook determination method and apparatus, a codebook reception method and apparatus, a terminal, and a network-side device provided in the embodiments of this application.

As shown in FIG. 2, an embodiment of this application provides a codebook determination method including the following steps:
Step 201: A terminal determines a candidate transmission occasion set based on a bundling granularity.

The bundling granularity is used for determining a correspondence between PDSCHs and PDSCH bundling groups. Specifically, one PDSCH bundling group includes at least one PDSCH.

Step 202: The terminal determines a hybrid automatic repeat request acknowledgement HARQ-ACK bit sequence based on the candidate transmission occasion set.

Optionally, a manner of determining the bundling granularity described in this embodiment of this application includes at least one of the following:
A11. All first PDSCH reception(s) belong to a same PDSCH bundling group.

The first PDSCH reception(s) are PDSCH reception(s) scheduled when a single piece of DCI indicates one row of a time domain resource assignment table (TDRA Table).

It should be noted that the TDRA table may be configured by a higher layer and that each row of the TDRA table corresponds to at least one PDSCH reception scheduled by one piece of DCI.

This case means that when one piece of DCI indicates one row of the time domain resource assignment table, all PDSCHs corresponding to this row correspond to a same PDSCH bundling group, that is, all PDSCHs scheduled by a single piece of DCI serve as a single PDSCH bundling group (Bundling Group).

A12. A PDSCH bundling group corresponding to each of all first PDSCH reception(s) is determined based on a division rule.

Specifically, in this case, when one piece of DCI indicates one row of the time domain resource assignment table, all PDSCHs corresponding to this row may correspond to multiple (that is, two or more) PDSCH bundling groups according to the division rule. To be specific, some of PDSCHs scheduled by a single piece of DCI may serve as a single PDSCH bundling group; or some of PDSCHs scheduled by a single piece of DCI are allowed to serve as a single PDSCH bundling group. Certainly, all the PDSCHs scheduled by the single piece of DCI may alternatively serve as a single PDSCH bundling group. Whether all the PDSCHs scheduled by the single piece of DCI specifically correspond to one or more PDSCH bundling groups can be further determined based on the following rules.

It should be noted that the division rule in this case may include at least one of the following:
A121. All PDSCH reception(s) in the first PDSCH reception(s) that are located within a same time unit belong to a same PDSCH bundling group.

The time unit herein may be slot (Slot) or sub-slot (Sub-slot), or other predefined unit length of time, such as millisecond (ms), or a predefined quantity of slots or sub-slots, which is not limited herein. That is, all PDSCHs scheduled by a single piece of DCI and located within a single time unit serve as a single PDSCH bundling group.

It should be noted herein that one to more PDSCHs located within the same time unit may be either contiguous or non-contiguous.

A122. All PDSCH reception(s) contiguous in time domain, which consist of at least one PDSCH reception, in the first PDSCH reception(s) belong to a same PDSCH bundling group.

That is, one to more PDSCHs scheduled by a single piece of DCI and contiguous in time domain serve as a single PDSCH bundling group.

It should be noted that being contiguous in time domain herein can be construed as: PDSCHs corresponding to the single PDSCH bundling group are connected sequentially, without unscheduled symbols, or a time interval between any two PDSCHs corresponding to the single PDSCH bundling group does not exceed a preset threshold, where the preset threshold may be defined by the protocol or configured by the higher layer. Optionally, when the PDSCHs corresponding to the single PDSCH bundling group span a plurality of time units, this PDSCH bundling group may be further split into a plurality of PDSCH bundling groups based on boundaries of the time units, such that PDSCHs corresponding to each PDSCH bundling group are contiguous in time domain and are all located within a same time unit.

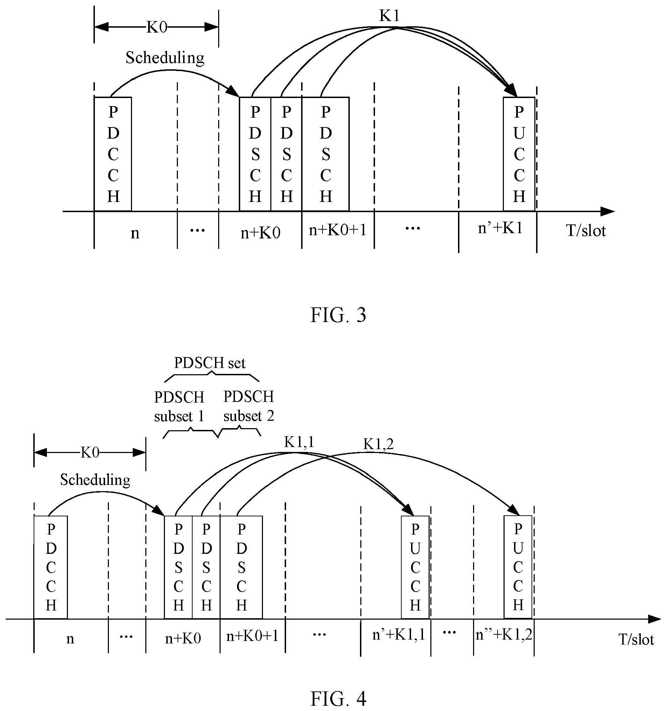

It can be understood that a HARQ-ACK corresponding to a single PDSCH bundling group is necessarily carried on a single PUCCH. Therefore, when the bundling granularity in A11 is used, HARQ-ACK information corresponding to one to more PDSCHs scheduled by the single piece of DCI is carried on the same PUCCH. For example, as shown in FIG. 3, HARQ-ACK information of all PDSCHs scheduled by one PDCCH is carried on a same PUCCH. However, when the bundling granularity in A12 is used, HARQ-ACK information corresponding to one to more PDSCHs scheduled by the single piece of DCI is carried on a same PUCCH or (based on the granularity of PDSCH bundling group) different PUCCHs, which is not limited herein. For example, as shown in FIG. 4, HARQ-ACK information of all PDSCHs scheduled by one PDCCH is differentiated by PDSCH subset (each PDSCH subset may correspond to one to more PDSCH bundling groups), and HARQ-ACK information corresponding to different PDSCH subsets is carried on different PUCCHs.

For the semi-static codebook in this embodiment of this application, a HARQ-ACK bit sequence is organized based on an occasion (candidate transmission occasion, which may include candidate transmission occasion for PDSCH or candidate transmission occasion for PDSCH bundling group) set, and corresponding HARQ-ACK bits are set/present for each occasion. This application is described in detail as follows.

In another embodiment of this application, a specific implementation that can be used in the step 201 is as follows:
Step 2011: Determine, based on the bundling granularity, an effective feedback time offset set and a PDSCH bundling group subset corresponding to each effective feedback time offset in the effective feedback time offset set.

It should be noted that an example form of the feedback time offset is K1, which is used to indicate an offset of a time domain position of the HARQ-ACK feedback relative to a time domain position of a PDSCH reception, and may be extended herein to indicate an offset of the time domain position of the HARQ-ACK feedback relative to a time domain position of a PDSCH bundling group. The time domain position of the PDSCH bundling group may be an end moment of the last PDSCH corresponding to the PDSCH bundling group. Optionally, K1 may be understood as an offset between a time unit in which an end moment of the last PDSCH corresponding to a PDSCH bundling group is located and a time unit in which a HARQ-ACK feedback corresponding to the PDSCH bundling group is located, with the offset being based on time unit which may be slot or sub-slot.

The effective feedback time offset set in this step and described subsequently may be described in terms of effective K1 set, which does not limit other representations of feedback time offset.

Step 2012: Determine, based on the PDSCH bundling group subset corresponding to each effective feedback time offset in the effective feedback time offset set, a candidate transmission occasion subset corresponding to each effective feedback time offset.

Step 2013: Obtain a candidate transmission occasion set based on the candidate transmission occasion subset corresponding to each effective feedback time offset.

It should be noted that after the candidate transmission occasion subset corresponding to each effective feedback time offset is obtained, the subsets may be combined by performing a predefined operation to obtain a candidate transmission occasion set. For example, candidate transmission occasion subsets corresponding to effective feedback time offsets may be cascaded sequentially in a preset order of the effective feedback time offsets, to obtain a candidate transmission occasion set. The preset order herein may means that the effective feedback time offsets are arranged in ascending order or descending order.

It should be noted that an optional implementation of the step 2011 is:
performing deletion processing on row(s), each of which conflicts with semi-static uplink symbol(s), in a time domain resource assignment table (Semi-static LTL symbol); and
determining, based on the time domain resource assignment table after deletion processing and the bundling granularity, the effective feedback time offset set and the PDSCH bundling group subset corresponding to each effective feedback time offset in the effective feedback time offset set.

It should be noted that the operation of performing deletion processing on row(s), each of which conflicts with semi-static uplink symbol(s), in a time domain resource assignment table may be performed before determining of the effective feedback time offset set and the PDSCH bundling group subset corresponding to each effective feedback time offset in the effective feedback time offset set, that is, the time domain resource assignment table as a whole may be first processed and then the PDSCH bundling group subset is determined by using the time domain resource assignment table after deletion processing; or the operation of performing deletion processing on row(s), each of which conflicts with semi-static uplink symbol(s), in a time domain resource assignment table may be performed during determining of the PDSCH bundling group subset, that is, necessary deletion processing is performed on the time domain resource assignment table while the PDSCH bundling group subset is being determined.

That is, row deletion herein does not have a strict sequential relationship with determining of the PDSCH bundling group subset, and a conflicting row may be deleted in the process of determining the PDSCH bundling group subset.

It should be noted that deletion processing on row(s), each of which conflicts with semi-static uplink symbol(s), in a time domain resource assignment table may be performed in an implementation as follows:
for each row in the time domain resource assignment table, in a case that there is a first target row satisfying a first preset condition, deleting the first target row from the time domain resource assignment table; where
the first preset condition is that at least one symbol of symbols occupied by any PDSCH corresponding to the first target row conflicts with semi-static uplink symbol(s) (Semi-static LTL symbol).

Any case in which for any row configured in the TDRA table, effective K1s corresponding to PDSCH bundling groups corresponding to the row are determined based on a feedback time offset (for example, K1) indication scheme (for example, when one piece of DCI indicates any row of the TDRA table, a corresponding related K1 scheme is determined for the row or each divided portion of the row) in use and the bundling granularity may be considered herein. If at least one symbol in symbols occupied by each of the PDSCHs corresponding to this row conflicts with semi-static LTL symbol(s) in this case, such a case (which may be construed as being corresponding to a particular combination of this row and corresponding K1 indication information) is considered to be practically unschedulable. Therefore, this case is not considered during determining of the PDSCH bundling group corresponding to the effective K1 (that is, a correspondence between a PDSCH bundling group and any effective K1 that is determined based on the combination of this row and the corresponding K1 indication information (which may also be considered as a combination of the effective K1 and the PDSCH bundling group, assuming that a discarded combination corresponds to an effective K1,i and a PDSCH bundling group j) and all are discarded, not being used as an input for subsequent determining of an occasion. Even if an occasion corresponding to a specific effective K1,i is present in a finally determined occasion set, this occasion does not correspond to the PDSCH bundling group j. To be specific, when the PDSCH bundling group j is combined with the effective K1,i, such a combination is not realizable and has been discarded, and therefore no corresponding occasion is present during construction of the semi-static codebook). Subsequently, this manner may be referred to as time domain deletion manner 1, where deletion is performed based on the granularity of an entire row.

It should be further noted that in this embodiment of this application, deletion processing may alternatively be not performed in step 2011, and deletion processing is to be performed in step 2012. Optionally, in another embodiment of this application, an optional implementation of step 2012 is:
performing deletion processing on PDSCH bundling group(s), each of which conflicts with semi-static uplink symbol(s), in the PDSCH bundling group subset corresponding to each effective feedback time offset; and
determining, based on the corresponding PDSCH bundling group subset after deletion processing, a corresponding candidate transmission occasion subset, for each effective feedback time offset.

Specifically, the performing deletion processing on PDSCH bundling group(s), each of which conflicts with semi-static uplink symbol(s), in the PDSCH bundling group subset corresponding to each effective feedback time offset includes:
for the PDSCH bundling group subset corresponding to each effective feedback time offset, in a case that there are first target PDSCH bundling group(s) in the PDSCH bundling group subset, each of which satisfies a second preset condition, deleting each of the first target PDSCH bundling group(s) from the PDSCH bundling group subset; where
the second preset condition is that at least one symbol of symbols occupied by any PDSCH in a first target PDSCH bundling group conflicts with semi-static uplink symbol(s).

That is, in this manner, discarding or deletion is performed based on the granularity of PDSCH bundling group during actual determining of the candidate transmission occasion (Occasion) set. This manner may be referred to as time domain deletion manner 2, where in the time domain deletion manner 2, deletion is performed based on the granularity of PDSCH bundling group.

When the time domain deletion manner 2 is used, for an effective K1, if it is determined base on the effective K1 (and an uplink slot or sub-slot in which the semi-static codebook is transmitted) that at least one symbol in symbols occupied by each PDSCH corresponding to a PDSCH bundling group in a PDSCH bundling group set corresponding to the effective K1 conflicts with semi-static UL symbol(s), the PDSCH bundling group is then deleted from the PDSCH bundling group set corresponding to the effective K1 and may not participate in the determining of occasion. When the PDSCH bundling group set corresponding to the effective K1 becomes empty due to the above deletion operation, the effective K1 is also skipped and no longer participates in the determining of occasion.

It can be understood that in comparison to the time domain deletion manner 1, in the time domain deletion manner 2, a conflict status between the semi-static UL symbol and PDSCHs corresponding to each PDSCH bundling group that corresponds to the row is considered during determining of whether a specific row of the TDRA table can be scheduled, and discarding or retaining is determined for each PDSCH bundling group; therefore, some PDSCH bundling groups corresponding to rows that cannot be actually scheduled may be probably retained and their corresponding occasions are determined. The determined occasions may not be actually used, so there may be some redundant bits in the final semi-static codebook constructed based on the occasion set.

It should be noted that a manner used for determining the effective feedback time offset when the bundling granularity is A11 may be as follows:
the effective feedback time offset corresponding to one PDSCH bundling group is indicated by DCI or configured by the higher layer, that is, an effective feedback time offset corresponding to one PDSCH bundling group is one feedback time offset indicated by DCI or configured by the higher layer.

It should be noted that when only one feedback time offset is present in the feedback time offset set configured by the higher layer, the feedback time offset does not need to be indicated by DCI in this case; when multiple (two and more) feedback time offsets are present in the feedback time offset set configured by the higher layer, the feedback time offset needs to be indicated by DCI.

It should be noted that for A11, all PDSCHs scheduled by using a single piece of DCI are divided into a single PDSCH bundling group, and then a single K1 indicated by the DCI (or configured by the higher layer) is an indicated K1 corresponding to the PDSCH bundling group, that is, the effective K1 in this case is the indicated K1.

A possible manner used for determining the effective feedback time offset when the bundling granularity is A12 includes one of the following:
B11. The effective feedback time offset corresponding to one PDSCH bundling group being indicated by DCI or configured by higher layer.

B12. The effective feedback time offset corresponding to one PDSCH bundling group being determined by the terminal based on an indication in DCI and a preset rule.

It should be noted that for A12, PDSCHs scheduled by a single piece of DCI may be divided into one to more PDSCH bundling groups, and an effective K1 corresponding to each PDSCH bundling group may be directly indicated by DCI or configured by the higher layer (that is, corresponding to an indicated K1, where the effective K1 in this case is the indicated K1) or may be determined based on an indication by the DCI and a preset rule (that is, corresponding to an equivalent K1, where the effective K1 is an equivalent K1). Herein, the equivalent K1 can be understood as a slot or sub-slot offset (being b-a) between an (uplink) slot or sub-slot (assumed to be a) in which an end moment of a PDSCH bundling group (which may be understood as an end moment of the last PDSCH included in the PDSCH bundling group) is located and an (uplink) slot or sub-slot (assumed to be b) in which the HARQ-ACK semi-static codebook transmission is located. Specifically, the implementation of determining the effective feedback time offset based on the indication by the DCI and the preset rule may be:
An effective K1 (assumed to be reference K1) corresponding to the last or 1st PDSCH bundling group (assumed to be a reference PDSCH bundling group) scheduled by using DCI is directly indicated by the DCI or configured by the higher layer, and effective K1s corresponding to other PDSCH bundling groups are determined based on the reference K1 as well as a slot or sub-slot offset (being d-c or c-d) between an (uplink) slot or sub-slot (assumed to be c) in which an end moment of each of the other PDSCH bundling groups (which may be understood as an end moment of the last PDSCH included in the PDSCH bundling group) is located and an (uplink) slot or sub-slot (assumed to be d) in which an end moment of the reference PDSCH bundling group is located. For example, if the reference K1 corresponding to the last PDSCH bundling group is indicated in the DCI, an equivalent K1 for a specific PDSCH bundling group in the other PDSCH bundling groups is equal to: reference K1 + d - c.

Optionally, in another embodiment of this application, an implementation to be used in the step 2012 is as follows:
determining, based on a mapping relationship between PDSCH bundling groups and candidate transmission occasions, a candidate transmission occasion subset corresponding to each effective feedback time offset.

The mapping relationship includes at least one of the following:
C11. A candidate transmission occasion being determined based on a target time domain resource assignment record corresponding to a PDSCH bundling group.

It should be noted that in this case, before the determining, based on a mapping relationship between PDSCH bundling groups and candidate transmission occasions, a candidate transmission occasion subset corresponding to each effective feedback time offset, the method may further include:
in a case that a second target PDSCH bundling group in the PDSCH bundling group subset corresponding to each effective feedback time offset satisfies a third preset condition, deleting the second target PDSCH bundling group; where
the third preset condition is that at least one symbol of symbols occupied by a target time domain resource assignment record corresponding to the second target PDSCH bundling group conflicts with semi-static uplink symbol(s).

Optionally, the target time domain resource assignment record may be a target start and length indicator value (Start and Length Indicator Value, SLIV) record.

When C11 is used, for the time domain deletion manner 2, optionally, for an effective K1, if it is determined base on the effective K1 (and an uplink slot or sub-slot in which the semi-static codebook is transmitted) that at least one symbol in symbols occupied by a target SLIV record corresponding to a PDSCH bundling group in a PDSCH bundling group set corresponding to the effective K1 conflicts with semi-static UL symbol(s), the PDSCH bundling group is then deleted from the PDSCH bundling group set corresponding to the effective K1 and may not participate in the determining of occasion. When the PDSCH bundling group set corresponding to the effective K1 becomes empty due to the above deletion operation, the effective K1 is also skipped and no longer participates in the determining of occasion. This optional manner may be referred to as time domain deletion manner 2', and a difference from the time domain deletion manner 2 lies in that during determining of whether a PDSCH bundling group needs to be deleted, only a conflict status of the symbols occupied by the target SLIV record corresponding to the PDSCH bundling group is taken into account, instead of a conflict status of symbols occupied by individual PDSCHs corresponding to the PDSCH bundling group. This features a simpler operation; however, because determining is not performed based on complete information, some unusable PDSCH bundling groups may consequently be not deleted. Therefore, potential redundant bits are introduced into the semi-static codebook.

Optionally, in this case, an implementation used for determining a candidate transmission occasion may be:
C111. Obtaining a target time domain resource assignment record corresponding to each PDSCH bundling group that corresponds to a target effective feedback time offset.

Optionally, in this case, a manner of obtaining the target time domain resource assignment record corresponding to the PDSCH bundling group includes one of the following:
D11. Determining the last time domain resource assignment record corresponding to the PDSCH bundling group as the target time domain resource assignment record.
D12. Determining the 1st time domain resource assignment record corresponding to the PDSCH bundling group as the target time domain resource assignment record.
D13. Determining the 1st time domain resource assignment record corresponding to the PDSCH bundling group in the last time unit as the target time domain resource assignment record.

It should be noted that the time unit herein may be slot (Slot) or sub-slot (Sub-slot), or other predefined unit length of time, such as millisecond (ms), or a predefined quantity of slots or sub-slots, which is not limited herein. In this case, when the PDSCH bundling group spans multiple time units, the last time unit is considered, because currently K1 is generally applied to a slot or sub-slot of the last PDSCH (that is, including the last (uplink) slot or sub-slot of the PDSCH scheduled).

D14. Determining a time domain resource assignment record with a preset index corresponding to the PDSCH bundling group as the target time domain resource assignment record.

D15. Determining a time domain resource assignment record with a preset index corresponding to the PDSCH bundling group in the last time unit as the target time domain resource assignment record.

It should be noted that the time unit herein may be slot (Slot) or sub-slot (Sub-slot), or other predefined unit length of time, such as millisecond (ms), or a predefined quantity of slots or sub-slots, which is not limited herein. In this case, when the PDSCH bundling group spans multiple time units, the last time unit is considered, because currently K1 is generally applied to a slot or sub-slot of the last PDSCH (that is, including the last (uplink) slot or sub-slot of the PDSCH scheduled). The predefined index may be prescribed by a protocol, configured, or pre-configured.

Optionally, the target time domain resource assignment record may include one of the following:
D21. A time domain resource assignment record corresponding to a preset PDSCH that corresponds to the PDSCH bundling group.

Specifically, the time domain resource assignment record may be a SLIV record.

It should be noted that this preset PDSCH may be prescribed by the protocol, configured, or pre-configured, that is, the target time domain resource assignment record in this case is a single time domain resource assignment record corresponding to one PDSCH. That is, SLIV refers to a SLIV configuration corresponding to the preset PDSCH (which is a designated PDSCH) that corresponds to the PDSCH bundling group, where both a symbol set occupied by the PDSCH within a single downlink slot and a slot or sub-slot offset of a slot or sub-slot in which the PDSCH is located relative to a slot or sub-slot of the last PDSCH are considered.

D22. A combined time domain resource assignment record obtained by combining time domain resource assignment records corresponding to at least two PDSCHs occupying adjacent consecutive symbols of a same downlink time unit in the PDSCH bundling group.

Optionally, the combined time domain resource assignment record may be a combined SLIV record.

It should be noted that the combined SLIV record herein refers to a single SLIV record occupying a symbol union contiguous in time domain and obtained by merging SLIVs corresponding to two or more PDSCHs located in a same downlink slot and occupying adjacent consecutive symbols in the PDSCH bundling group. For example, assuming that a range of symbols corresponding to SLIV1 is (0-7), a range of symbols corresponding to SLIV2 is (8-13), and both correspond to two PDSCHs within a same downlink slot, a range of symbols corresponding to the combined SLIV is (0-13).

C112. Obtaining at least one time domain resource assignment record subset based on the target time domain resource assignment record.

C113. Determining one candidate transmission occasion for a target effective feedback time offset corresponding to each time domain resource assignment record subset in the at least one time domain resource assignment record subset.

Using the target time domain resource assignment record being a target SLIV record as an example, an implementation process of C111 to C113 is: collecting target SLIV records corresponding to PDSCH bundling groups that correspond to a same effective K1 and performing a grouping/pruning (Grouping/Pruning) operation on the target SLIV records to obtain one to more SLIV record subsets. Each SLIV record subset corresponds to a single occasion for a current effective K1 (or a combination of each SLIV record subset and the current effective K1 corresponds to a single occasion). Optionally, the grouping/pruning operation performed on the target SLIV records may be still the grouping/pruning operation performed on each row (corresponding to a single SLIV) of the TDRA table in Rel-15/16.

That is, C11 above can be simply construed as follows: the PDSCH bundling group corresponds to a specific occasion based on a SLIV record subset to which the target SLIV record corresponding to the PDSCH bundling group belongs as well as an effective K1 corresponding to the PDSCH bundling group.

C12. A candidate transmission occasion being determined based on whether PDSCH bundling groups overlap in time domain.

It should be noted that the operation in this manner includes: collecting PDSCH bundling groups corresponding to a same effective K1, and determining, based on whether the PDSCH bundling groups overlap in time domain, the maximum number of occasions that can be scheduled simultaneously for the effective K1 and a correspondence between the PDSCH bundling groups and the occasions.

Time-domain overlapping between the PDSCH bundling groups can be construed as: if any one PDSCH corresponding to PDSCH bundling group 1 and any one PDSCH corresponding to PDSCH bundling group 2 occupy a same symbol, it is considered that time-domain overlapping is present between the two PDSCH bundling groups.

The following briefly describes an operation of determining an occasion set based on different bundling granularities by using a single-K1 indication scheme (for PDSCHs scheduled by a single piece of DCI, HARQ-ACK is fed back on a same PUCCH) and a mapping relationship between PDSCH bundling groups and candidate transmission occasions being C11 as an example.

For bundling granularity A11: for K1 values in a K1 set configured by the higher layer, target SLIV records corresponding to each row of the TDRA table or each schedulable row (corresponding to a single PDSCH bundling group) are collected and an existing codebook construction procedure is still used.

In the TDRA table which the existing semi-static codebook construction procedure is performed based on, each row corresponds to only a single SLIV Herein, a TDRA table with each row corresponding to a single target SLIV record is used as an input, and an effective K1 corresponding to a single PDSCH bundling group that corresponds to each row of the TDRA table is an indicated K1, which corresponds to a value of K1 in a K1 set configured by the higher layer (that is, an effective K1 set is a K1 set configured by the higher layer).

When time domain deletion manner 1 or time domain deletion manner 2 (each row in the TDRA table corresponds to a single PDSCH bundling group; therefore, deletion based on the granularity of entire row is practically equivalent to deletion based on the granularity of PDSCH bundling group) is used, target SLIV records only corresponding to all schedulable rows in the TDRA table (that is, when semi-static codebook transmission is located in an given uplink slot or sub-slot and the K1 value is applied to a specific row of the TDRA table, if none of PDSCHs corresponding to configured SLIVs in the row conflicts with any semi-static LTL symbol, this row is considered a schedulable row) are collected.

When time domain deletion manner 2' is used, for each K1 value, target SLIV records corresponding to all rows in the TDRA table are collected, and then rows that do not meet requirements are deleted based on the target SLIV record of each row (that is, when semi-static codebook transmission is located in a given uplink slot or sub-slot and the K1 value is applied to a specific row of the TDRA table, if the target SLIV record corresponding to this row does not conflict with any semi-static LTL symbol, this row may be retained; otherwise, this row is deleted).

After a retained row corresponding to each K1 value and the target SLIV record corresponding to each row are determined for each K1 value, the existing codebook construction procedure can be still fully used.

For bundling granularity A12, in another embodiment of this application, an optional implementation of step 2012 is:
determining, based on a correspondence between all PDSCH bundling groups scheduled when one piece of DCI indicates one row of a time domain resource assignment table and candidate transmission occasions, a candidate transmission occasion subset corresponding to each effective feedback time offset.

Optionally, the correspondence includes one of the following:

E11. All PDSCH bundling groups scheduled when one piece of DCI indicates one row of a time domain resource assignment table correspond to a same candidate transmission occasion.

That is, in this case, all PDSCH bundling groups scheduled by each piece of DCI correspond uniformly to a single occasion.

It should be noted that in this case, after the determining an effective feedback time offset set and a PDSCH bundling group subset corresponding to each effective feedback time offset in the effective feedback time offset set, the following may be further included:
deleting a first PDSCH bundling group in the PDSCH bundling group subset; where
the first PDSCH bundling group is a PDSCH bundling group other than the last PDSCH bundling group in all PDSCH bundling groups that are scheduled when one piece of DCI indicates a second target row of the time domain resource assignment table, and the second target row is any row in the time domain resource assignment table.

That is, in this case, after the PDSCH bundling group subset is obtained, a bundling group that does not participate in mapping of candidate transmission occasion is then deleted. In other words, only the last PDSCH bundling group in all PDSCH bundling groups scheduled when the DCI indicates a specific row of the time domain resource assignment table is finally retained.

Optionally, an implementation used for determining an effective feedback time offset set and a PDSCH bundling group subset corresponding to each effective feedback time offset in the effective feedback time offset set is:
determining, based on a second PDSCH bundling group, the effective feedback time offset set and the PDSCH bundling group subset corresponding to each effective feedback time offset in the effective feedback time offset set; where
the second PDSCH bundling group is the last PDSCH bundling group in all PDSCH bundling groups that are scheduled when one piece of DCI indicates a third target row of the time domain resource assignment table, and the third target row is any row in the time domain resource assignment table.

It should be noted that in this case, only the last PDSCH bundling group is considered during determining of the PDSCH bundling group subset. This manner features simpler implementation, and in this way, each PDSCH bundling group in the determined PDSCH bundling group subset needs to be used for mapping of candidate transmission occasion (that is, determining a candidate transmission occasion corresponding to the PDSCH bundling group).

It should be noted that after the above operations are performed, the occasion can be determined based on the last PDSCH bundling group corresponding to the scheduling DCI; however, the determined occasion corresponds to all PDSCH bundling groups corresponding to the scheduling DCI (assuming that the scheduling DCI indicates one row of the TDRA table to indicate time domain resource assignment information of one to more PDSCHs being scheduled, it can be understood that the determined occasion corresponds to one to more PDSCH bundling groups corresponding to the indicated row in the TDRA table). Herein, the last PDSCH bundling group corresponding to the scheduling DCI (or corresponding to a specific row in the TDRA table) is used for determining the occasion, which is based on the assumption that the effective K1 corresponding to the last PDSCH bundling group is an indicated K1 (that is, the effective K1 set is a K1 set configured by the higher layer). In this case, corresponding operations in the existing codebook construction procedure can be performed during determining of the occasion set. For the specific operation procedure, refer to the corresponding description of bundling granularity manner 1 (inputs of both are the same: only a single PDSCH bundling group is considered for each row of the TDRA table, and both are based on the K1 set configured by the higher layer). It can be understood that a one-to-one correspondence is present between scheduling DCIs and occasions.

Optionally, in this case, an implementation to be used in the step 202 is:
determining that each candidate transmission occasion corresponds to N copies of HARQ-ACK bits; and
determining the HARQ-ACK bit sequence based on the N copies of HARQ-ACK bits corresponding to each candidate transmission occasion; where
N is an integer greater than or equal to 1.

To ensure that the HARQ-ACK bits corresponding to the occasion are able to carry HARQ-ACK information corresponding to one to more PDSCH bundling groups that corresponds to the occasion, the occasion corresponds to N copies of HARQ-ACK bits, each copy of HARQ-ACK bits corresponding to one to two bits. A manner of determining the number of bits and values of the bits is: HARQ-ACK information corresponding to all PDSCHs that corresponds to a single PDSCH bundling group is compressed/packed into one or two HARQ-ACK bits in a manner of time domain bundling, and the one or two HARQ-ACK bits are included in the HARQ-ACK codebook for transmission. Time domain bundling can be construed as: performing a binary AND operation on a decoding result of a corresponding codeword of two or more PDSCHs to obtain a corresponding fusion decoding result of this codeword (which may be represented by 1 bit), where when two-codeword transmission is configured, each codeword corresponds to its respective fusion decoding result, and further operations can be performed based on spatial bundling (spatial bundling) configuration. Optionally, Ns corresponding to different candidate transmission occasions may be determined in one of the following manners:
F11. N corresponding to each candidate transmission occasion is determined based on a maximum value of first values corresponding to a third target PDSCH bundling group that corresponds to the target candidate transmission occasion, where the third target PDSCH bundling group is any PDSCH bundling group corresponding to the candidate transmission occasion.

It should be noted that the first value is the number of PDSCH bundling groups obtained by scheduling when a single piece of DCI indicates one row of the time domain resource assignment table, where the PDSCH bundling groups obtained by scheduling includes the third target PDSCH bundling group.

To be specific, N corresponding to each occasion is a maximum value of the number of PDSCH bundling groups scheduled by a single piece of DCI, and the PDSCH bundling groups scheduled by this DCI (including at least the last PDSCH bundling group scheduled) correspond to this occasion (or the number of PDSCH bundling groups corresponding to a row with the largest number of PDSCH bundling groups among all rows in the TDRA table that correspond to this occasion (being corresponding to this occasion at least based on the last PDSCH bundling groups corresponding to the rows)), where Ns corresponding to occasions may be unequal.

A correspondence between each occasion and a row of the TDRA table is understood consistently on both sides of the terminal and the network, and therefore N corresponding to each occasion is also understood consistently on both sides. In this manner, the number of bits can be set only based on actual needs, which can avoid redundant bits and reduce overheads.

F 12. N corresponding to each candidate transmission occasion is determined based on a maximum value of second values corresponding to a fourth target PDSCH bundling group that corresponds to the target candidate transmission occasion, where the target candidate transmission occasion is one of candidate transmission occasions corresponding to each effective feedback time offset in the effective feedback time offset set, and the fourth target PDSCH bundling group is any PDSCH bundling group corresponding to the target candidate transmission occasion.

It should be noted that the second value is the number of PDSCH bundling groups obtained by scheduling when a single piece of DCI indicates one row of the time domain resource assignment table, where the PDSCH bundling groups obtained by scheduling includes the fourth target PDSCH bundling group.

It should be noted that this manner is relatively simple to implement as determining a specific N corresponding to each occasion is not required. However, this manner leads to relatively large feedback overheads.

E12. Each PDSCH bundling group in all PDSCH bundling groups scheduled when one piece of DCI indicates one row of a time domain resource assignment table corresponds to a different candidate transmission occasion.

Optionally, that is, in this case, each PDSCH bundling group scheduled by each piece of DCI corresponds to a different occasion. I other words, a corresponding occasion (including a corresponding effective K1, a corresponding SLIV record subset, or the like) is determined for each PDSCH bundling group scheduled by each piece of DCI (or corresponding to each row in the TDRA table). Compared with a K1 set configured by the higher layer, the effective K1 set in this case may further include newly introduced equivalent K1s. After determining of the effective K1 set and a PDSCH bundling group set corresponding to each effective K1, corresponding operations in the existing codebook construction procedure can be performed.

It should be noted that after determining of an occasion set (corresponding to a specific serving cell), HARQ-ACK bits corresponding to the occasions can be cascaded sequentially in a preset order to form a HARQ-ACK bit sequence based on a PDSCH reception/detection status after a time domain bundling operation is performed for setting.

The number of HARQ-ACK bits corresponding to each occasion is corresponding to N copies of HARQ-ACK bits when E11 is used; otherwise, (that is, in the case of E12), corresponding to 1 copy of HARQ-ACK bits. Each copy of HARQ-ACK bits corresponds to 1 to 2 bits. For details, refer to the foregoing descriptions of time domain bundling.

It should be noted that for a specific PDSCH bundling group actually detected, HARQ-ACK bits corresponding to its corresponding occasion are set based on a time domain bundling result of the PDSCH bundling group:
when E11 is used, if the number (assumed to be M) of detected PDSCH bundling groups scheduled by a piece of DCI is less than N corresponding to an occasion that corresponds to the DCI, M copies specified from the N copies of HARQ-ACK bits corresponding to this occasion are used, for example, the M copies at the very beginning are used, or the M copies at the very end are used; and when E12 is used, the single copy of HARQ-ACK bits corresponding to the occasion is used directly.

The following describes specific application of this application by using an example of time domain bundling for a PDSCH set scheduled by a single piece of DCI.

For example, the procedure of constructing a HARQ-ACK semi-static codebook is described by using an example with a bundling granularity being A11, a mapping relationship between PDSCH bundling groups and candidate transmission occasions being C11, a manner of obtaining a target time domain resource assignment record corresponding to a PDSCH bundling group being D11, a target SLIV record being corresponding to a single SLIV, and the time domain deletion manner 1.

In this case, for each K1 value in the K1 set configured by the higher layer, based on an uplink slot or sub-slot in which the semi-static codebook is transmitted, assuming that when this K1 value is applied, it is determined whether rows configured in the TDRA table conflict with a semi-static LTL symbol, a corresponding row is discarded/deleted when the conflict occurs, and if the number of rows remaining for the K1 value is greater than 1, the last SLIVs of these rows are collected and a grouping/pruning operation is performed based on a time domain overlapping relationship between SLIVs (assuming that they are located in the same downlink slot) with reference to the existing codebook construction procedure. Each SLIV subset output may correspond to a single occasion (corresponding to the K1 value).

A union of occasion subsets corresponding to the K1 values (for example, the occasion subsets corresponding to the K1 values are sequentially cascaded based on a traversal order of the K1 values) is used as a determined occasion set to determine a corresponding HARQ-ACK bit sequence as a semi-static codebook to be transmitted.

It should be noted that after the HARQ-ACK bit sequence is obtained, the terminal needs to send the HARQ-ACK bit sequence to the network-side device at a corresponding feedback position, and the network-side device, after receiving the HARQ-ACK bit sequence, parses the HARQ-ACK bit sequence based on the same understanding as that of the terminal side to obtain a HARQ-ACK feedback result for each scheduled PDSCH.

It should be noted that in this embodiment of this application, when multi-PDSCH scheduling is supported, a specific and feasible solution is provided for time domain bundling being applied to the HARQ-ACK semi-static codebook, which can simplify the codebook construction procedure and reduce feedback overheads.

It should be noted that, for the codebook determination method provided by the embodiments of this application, the execution body may be a codebook determination apparatus, or a control module for executing the codebook determination method in the codebook determination apparatus. In the embodiments of this application, the codebook determination method being performed by the codebook determination apparatus is used as an example to describe the codebook determination apparatus provided in the embodiments of this application.

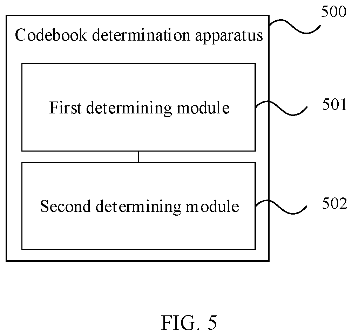

As shown in FIG. 5, an embodiment of this application provides a codebook determination apparatus 500 including:
a first determining module 501, configured to determine a candidate transmission occasion set based on a bundling granularity, where the bundling granularity is used for determining a correspondence between physical downlink shared channel PDSCHs and PDSCH bundling groups; and
a second determining module 502, configured to determine a hybrid automatic repeat request acknowledgement HARQ-ACK bit sequence based on the candidate transmission occasion set.

Specifically, a manner of determining the bundling granularity includes at least one of the following:
all first PDSCH reception(s) belonging to a same PDSCH bundling group; and
a PDSCH bundling group corresponding to each of all first PDSCH reception(s) being determined based on a division rule; where
the first PDSCH reception(s) are PDSCH reception(s) scheduled when a single piece of downlink control information DCI indicates one row of a time domain resource assignment table.

Optionally, the division rule includes at least one of the following:
all PDSCH reception(s) in the first PDSCH reception(s) that are located within a same time unit belong to a same PDSCH bundling group; and
all PDSCH reception(s) contiguous in time domain, which consist of at least one PDSCH reception, in the first PDSCH reception(s) belong to a same PDSCH bundling group.

Optionally, the first determining module 501 includes:
a first determining unit, configured to determine, based on the bundling granularity, an effective feedback time offset set and a PDSCH bundling group subset corresponding to each effective feedback time offset in the effective feedback time offset set;
a second determining unit, configured to determine, based on the PDSCH bundling group subset corresponding to each effective feedback time offset in the effective feedback time offset set, a candidate transmission occasion subset corresponding to each effective feedback time offset; and
a first obtaining unit, configured to obtain a candidate transmission occasion set based on the candidate transmission occasion subset corresponding to each effective feedback time offset.

Optionally, the first determining unit includes:
a first processing subunit, configured to perform deletion processing on row(s), each of which conflicts with semi-static uplink symbol(s), in a time domain resource assignment table; and
a first determining subunit, configured to determine, based on the time domain resource assignment table after deletion processing and the bundling granularity, the effective feedback time offset set and the PDSCH bundling group subset corresponding to each effective feedback time offset in the effective feedback time offset set.

Optionally, the first processing subunit is configured to:
for each row in the time domain resource assignment table, in a case that there is a first target row satisfying a first preset condition, delete the first target row from the time domain resource assignment table; where
the first preset condition is that at least one symbol of symbols occupied by any PDSCH corresponding to the first target row conflicts with semi-static uplink symbol(s).

Optionally, the second determining unit includes:
a second processing subunit, configured to perform deletion processing on PDSCH bundling group(s), each of which conflicts with semi-static uplink symbol(s), in the PDSCH bundling group subset corresponding to each effective feedback time offset; and
a second determining subunit, configured to determine, based on the corresponding PDSCH bundling group subset after deletion processing, a corresponding candidate transmission occasion subset, for each effective feedback time offset.

Optionally, the second processing subunit is configured to:
for the PDSCH bundling group subset corresponding to each effective feedback time offset, in a case that there are first target PDSCH bundling group(s) in the PDSCH bundling group subset, each of which satisfies a second preset condition, delete each of the first target PDSCH bundling group(s) from the PDSCH bundling group subset; where
the second preset condition is that at least one symbol of symbols occupied by any PDSCH in a first target PDSCH bundling group conflicts with semi-static uplink symbol(s).

Optionally, in a case that the bundling granularity is all first PDSCH receptions belonging to a same PDSCH bundling group, a manner of determining the effective feedback time offset includes:
the effective feedback time offset corresponding to one PDSCH bundling group being indicated by DCI or configured by higher layer.

Optionally, in a case that the bundling granularity is a PDSCH bundling group corresponding to each of all first PDSCH reception(s) being determined based on a division rule, a manner of determining the effective feedback time offset includes:
the effective feedback time offset corresponding to one PDSCH bundling group being indicated by DCI or configured by higher layer; or
the effective feedback time offset corresponding to one PDSCH bundling group being determined by the terminal based on an indication in DCI and a preset rule.

Optionally, the second determining unit is configured to:
determine, based on a mapping relationship between PDSCH bundling groups and candidate transmission occasions, a candidate transmission occasion subset corresponding to each effective feedback time offset; where
the mapping relationship includes at least one of the following:
   a candidate transmission occasion being determined based on a target time domain resource assignment record corresponding to a PDSCH bundling group; and
   a candidate transmission occasion being determined based on whether PDSCH bundling groups overlap in time domain.

Optionally, in a case that the mapping relationship is the candidate transmission occasion being determined based on the target time domain resource assignment record corresponding to the PDSCH bundling group, before the second determining unit determines, based on a mapping relationship between PDSCH bundling groups and candidate transmission occasions, a candidate transmission occasion corresponding to each effective feedback time offset, the following is further included:
a first processing unit, configured to: in a case that a second target PDSCH bundling group in the PDSCH bundling group subset corresponding to each effective feedback time offset satisfies a third preset condition, delete the second target PDSCH bundling group; where
the third preset condition is that at least one symbol of symbols occupied by a target time domain resource assignment record corresponding to the second target PDSCH bundling group conflicts with semi-static uplink symbol(s).

Optionally, an implementation of determining a candidate transmission occasion based on a target time domain resource assignment record corresponding to a PDSCH bundling group includes:
obtaining a target time domain resource assignment record corresponding to each PDSCH bundling group that corresponds to a target effective feedback time offset;
obtaining at least one time domain resource assignment record subset based on the target time domain resource assignment record; and
determining one candidate transmission occasion for a target effective feedback time offset corresponding to each time domain resource assignment record subset in the at least one time domain resource assignment record subset.

Optionally, a manner of obtaining the target time domain resource assignment record corresponding to the PDSCH bundling group includes one of the following:
determining the last time domain resource assignment record corresponding to the PDSCH bundling group as the target time domain resource assignment record;
determining the 1st time domain resource assignment record corresponding to the PDSCH bundling group as the target time domain resource assignment record;
determining the 1st time domain resource assignment record corresponding to the PDSCH bundling group in the last time unit as the target time domain resource assignment record;
determining a time domain resource assignment record with a preset index corresponding to the PDSCH bundling group as the target time domain resource assignment record; and
determining a time domain resource assignment record with a preset index corresponding to the PDSCH bundling group in the last time unit as the target time domain resource assignment record.

Specifically, the target time domain resource assignment record includes one of the following:
a time domain resource assignment record corresponding to a preset PDSCH that corresponds to the PDSCH bundling group; and
a combined time domain resource assignment record obtained by combining time domain resource assignment records corresponding to at least two PDSCHs occupying adjacent consecutive symbols of a same downlink time unit in the PDSCH bundling group.

Optionally, in a case that the bundling granularity is a PDSCH bundling group corresponding to each of all first PDSCH reception(s) being determined based on a division rule, the second determining unit is configured to:
determine, based on a correspondence between all PDSCH bundling groups scheduled when one piece of DCI indicates one row of a time domain resource assignment table and candidate transmission occasions, a candidate transmission occasion subset corresponding to each effective feedback time offset, where
the correspondence includes at least one of the following:
   all PDSCH bundling groups scheduled when one piece of DCI indicates one row of a time domain resource assignment table correspond to a same candidate transmission occasion; and
   each PDSCH bundling group in all PDSCH bundling groups scheduled when one piece of DCI indicates one row of a time domain resource assignment table corresponds to a different candidate transmission occasion.

Optionally, in a case that the correspondence is all PDSCH bundling groups scheduled when one piece of DCI indicates one row of a time domain resource assignment table being corresponding to a same candidate transmission occasion, after the second determining unit determines an effective feedback time offset set and a PDSCH bundling group subset corresponding to each effective feedback time offset in the effective feedback time offset set, the following is further included:
a second processing unit, configured to delete a first PDSCH bundling group in the PDSCH bundling group subset.

The first PDSCH bundling group is a PDSCH bundling group other than the last PDSCH bundling group in all PDSCH bundling groups that are scheduled when one piece of DCI indicates a second target row of the time domain resource assignment table, and the second target row is any row in the time domain resource assignment table.

Optionally, in a case that the correspondence is all PDSCH bundling groups scheduled when one piece of DCI indicates one row of a time domain resource assignment table being corresponding to a same candidate transmission occasion, the second determining unit is configured to:
determine, based on a second PDSCH bundling group, the effective feedback time offset set and the PDSCH bundling group subset corresponding to each effective feedback time offset in the effective feedback time offset set; where
the second PDSCH bundling group is the last PDSCH bundling group in all PDSCH bundling groups that are scheduled when one piece of DCI indicates a third target row of the time domain resource assignment table, and the third target row is any row in the time domain resource assignment table.

Optionally, in a case that the correspondence is all PDSCH bundling groups scheduled when one piece of DCI indicates one row of a time domain resource assignment table being corresponding to a same candidate transmission occasion, the second determining module 502 includes:
a third determining unit, configured to determine that each candidate transmission occasion corresponds to N copies of HARQ-ACK bits; and
a fourth determining unit, configured to determine the HARQ-ACK bit sequence based on the N copies of HARQ-ACK bits corresponding to each candidate transmission occasion; where
N is an integer greater than or equal to 1.

Specifically, Ns corresponding to different candidate transmission occasions are determined in one of the following manners:
N corresponding to each candidate transmission occasion is determined based on a maximum value of first values corresponding to a third target PDSCH bundling group that corresponds to the target candidate transmission occasion, where the third target PDSCH bundling group is any PDSCH bundling group corresponding to the candidate transmission occasion; and
N corresponding to each candidate transmission occasion is determined based on a maximum value of second values corresponding to a fourth target PDSCH bundling group that corresponds to the target candidate transmission occasion, where the target candidate transmission occasion is one of candidate transmission occasions corresponding to each effective feedback time offset in the effective feedback time offset set, and the fourth target PDSCH bundling group is any PDSCH bundling group corresponding to the target candidate transmission occasion; where
the first value is the number of PDSCH bundling groups obtained by scheduling when a single piece of DCI indicates one row of the time domain resource assignment table, and the PDSCH bundling groups obtained by scheduling include the third target PDSCH bundling group; and the second value is the number of PDSCH bundling groups obtained by scheduling when a single piece of DCI indicates one row of the time domain resource assignment table, and the PDSCH bundling groups obtained by scheduling include the fourth target PDSCH bundling group.

Optionally, in this embodiment of this application, after the second determining module determines a hybrid automatic repeat request acknowledgement HARQ-ACK bit sequence based on the candidate transmission occasion set, the following may be further included:
a sending module, configured to send the HARQ-ACK bit sequence to a network-side device.

It should be noted that during multi-PDSCH scheduling, the candidate transmission occasion set is determined based on the bundling granularity and then the HARQ-ACK bit sequence is determined based on the candidate transmission occasion set. Such HARQ-ACK semi-static codebook determination manner simplifies a codebook construction procedure and also reduces feedback overheads.

The codebook determination apparatus in this embodiment of this application may be an apparatus, or an apparatus or electric device having an operating system, or may be a component, an integrated circuit, or a chip in the terminal. The apparatus or electric device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The codebook determination apparatus provided in this embodiment of this application is capable of implementing the processes implemented in the method embodiments in FIG. 2, with the same technical effects achieved. To avoid repetition, details are not described herein again.

An embodiment of this application further provides a terminal, including a processor and a communication interface, where the processor is configured to determine a candidate transmission occasion set based on a bundling granularity, where the bundling granularity is used for determining a correspondence between physical downlink shared channel PDSCHs and PDSCH bundling groups; and determine a hybrid automatic repeat request acknowledgement HARQ-ACK bit sequence based on the candidate transmission occasion set.

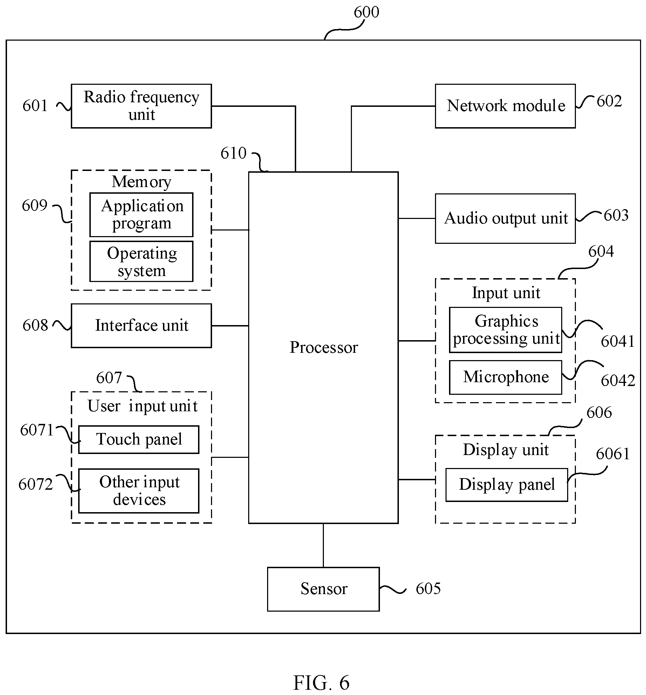

The terminal embodiments correspond to the foregoing terminal-side method embodiments, and the implementation processes and implementations of the foregoing method embodiments can be applied to the terminal embodiments, with the same technical effects achieved. Specifically, FIG. 6 is a schematic diagram of a hardware structure of a terminal for implementing the embodiments of this application.

The terminal 600 includes but is not limited to at least part of components such as a radio frequency unit 601, a network module 602, an audio output unit 603, an input unit 604, a sensor 605, a display unit 606, a user input unit 607, an interface unit 608, a memory 609, and a processor 610.

Persons skilled in the art can understand that the terminal 600 may further include a power supply (for example, a battery) supplying power to the components, and the power supply may be logically connected to the processor 610 through a power management system. In this way, functions such as charge management, discharge management, and power consumption management are implemented by using the power management system. The structure of the terminal shown in FIG. 6 does not constitute any limitation on the terminal. The terminal may include more or fewer components than those shown in the figure, or a combination of some components, or the components disposed differently. Details are not described herein again.

It can be understood that in this embodiment of this application, the input unit 604 may include a graphics processing unit (Graphics Processing Unit, GPU) 6041 and a microphone 6042. The graphics processing unit 6041 processes image data of a still picture or video obtained by an image capture apparatus (such as a camera) in a video capture mode or an image capture mode. The display unit 606 may include a display panel 6061, and the display panel 6061 may be configured in a form of a liquid crystal display, an organic light-emitting diode, and the like. The user input unit 607 may include a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function key (such as a volume control key or a power on/off key), a trackball, a mouse, a joystick, and the like. Details are not described herein.

In this embodiment of this application, the radio frequency unit 601 receives downlink data from a network-side device, and then sends the downlink data to the processor 610 for processing; and also sends uplink data to the network-side device. Generally, the radio frequency unit 601 includes but is not limited to an antenna, at least one amplifier, a transceiver, a coupler, a low noise amplifier, a duplexer, and the like.

The memory 609 may be configured to store software programs or instructions and various data. The memory 609 may include a program or instruction storage area and a data storage area. The program or instruction storage area may store an operating system, an application program or instruction required by at least one function (for example, a sound playback function or an image playback function), and the like. In addition, the memory 609 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another volatile solid-state storage device.

The processor 610 may include one or more processing units. Optionally, an application processor and a modem processor may be integrated in the processor 610. The application processor primarily processes an operating system, user interfaces, application programs or instructions, and the like. The modem processor primarily processes radio communication, for example, being a baseband processor. It can be understood that the modem processor may alternatively be not integrated in the processor 610.

The processor 610 is configured to:
determine a candidate transmission occasion set based on a bundling granularity, where the bundling granularity is used for determining a correspondence between physical downlink shared channel PDSCHs and PDSCH bundling groups; and
determine a hybrid automatic repeat request acknowledgement HARQ-ACK bit sequence based on the candidate transmission occasion set.

The terminal in this embodiments of this application determines, during multi-PDSCH scheduling, the candidate transmission occasion set based on the bundling granularity and then determines the HARQ-ACK bit sequence based on the candidate transmission occasion set. Such HARQ-ACK semi-static codebook determination manner simplifies a codebook construction procedure and also reduces feedback overheads.

Optionally, a manner of determining the bundling granularity includes at least one of the following:
all first PDSCH reception(s) belonging to a same PDSCH bundling group; and
a PDSCH bundling group corresponding to each of all first PDSCH reception(s) being determined based on a division rule; where
the first PDSCH reception(s) are PDSCH reception(s) scheduled when a single piece of downlink control information DCI indicates one row of a time domain resource assignment table.

Specifically, the division rule includes at least one of the following:
all PDSCH reception(s) in the first PDSCH reception(s) that are located within a same time unit belong to a same PDSCH bundling group; and
all PDSCH reception(s) contiguous in time domain, which consist of at least one PDSCH reception, in the first PDSCH reception(s) belong to a same PDSCH bundling group.

Optionally, the processor 610 is configured to:
determine, based on the bundling granularity, an effective feedback time offset set and a PDSCH bundling group subset corresponding to each effective feedback time offset in the effective feedback time offset set;
determine, based on the PDSCH bundling group subset corresponding to each effective feedback time offset in the effective feedback time offset set, a candidate transmission occasion subset corresponding to each effective feedback time offset; and
obtain a candidate transmission occasion set based on the candidate transmission occasion subset corresponding to each effective feedback time offset.

Optionally, the processor 610 is configured to:
perform deletion processing on row(s), each of which conflicts with semi-static uplink symbol(s), in a time domain resource assignment table; and
determine, based on the time domain resource assignment table after deletion processing and the bundling granularity, the effective feedback time offset set and the PDSCH bundling group subset corresponding to each effective feedback time offset in the effective feedback time offset set.

Optionally, the processor 610 is configured to:
for each row in the time domain resource assignment table, in a case that there is a first target row satisfying a first preset condition, delete the first target row from the time domain resource assignment table; where
the first preset condition is that at least one symbol of symbols occupied by any PDSCH corresponding to the first target row conflicts with semi-static uplink symbol(s).

Optionally, the processor 610 is configured to:
perform deletion processing on PDSCH bundling group(s), each of which conflicts with semi-static uplink symbol(s), in the PDSCH bundling group subset corresponding to each effective feedback time offset; and
determine, based on the corresponding PDSCH bundling group subset after deletion processing, a corresponding candidate transmission occasion subset, for each effective feedback time offset.

Optionally, the processor 610 is configured to:
for the PDSCH bundling group subset corresponding to each effective feedback time offset, in a case that there are first target PDSCH bundling group(s) in the PDSCH bundling group subset, each of which satisfies a second preset condition, delete each of the first target PDSCH bundling group(s) from the PDSCH bundling group subset; where
the second preset condition is that at least one symbol of symbols occupied by any PDSCH in a first target PDSCH bundling group conflicts with semi-static uplink symbol(s).

Optionally, in a case that the bundling granularity is all first PDSCH receptions belonging to a same PDSCH bundling group, a manner of determining the effective feedback time offset includes:
the effective feedback time offset corresponding to one PDSCH bundling group being indicated by DCI or configured by higher layer.

Optionally, in a case that the bundling granularity is a PDSCH bundling group corresponding to each of all first PDSCH reception(s) being determined based on a division rule, a manner of determining the effective feedback time offset includes:
the effective feedback time offset corresponding to one PDSCH bundling group being indicated by DCI or configured by higher layer; or
the effective feedback time offset corresponding to one PDSCH bundling group being determined by the terminal based on an indication in DCI and a preset rule.

Optionally, the processor 610 is configured to:
determine, based on a mapping relationship between PDSCH bundling groups and candidate transmission occasions, a candidate transmission occasion subset corresponding to each effective feedback time offset; where
the mapping relationship includes at least one of the following:
   a candidate transmission occasion being determined based on a target time domain resource assignment record corresponding to a PDSCH bundling group; and
   a candidate transmission occasion being determined based on whether PDSCH bundling groups overlap in time domain.

Optionally, in a case that the mapping relationship is the candidate transmission occasion being determined based on the target time domain resource assignment record corresponding to the PDSCH bundling group, the processor 610 is further configured to:
in a case that a second target PDSCH bundling group in the PDSCH bundling group subset corresponding to each effective feedback time offset satisfies a third preset condition, delete the second target PDSCH bundling group; where
the third preset condition is that at least one symbol of symbols occupied by a target time domain resource assignment record corresponding to the second target PDSCH bundling group conflicts with semi-static uplink symbol(s).

Optionally, the processor 610 is configured to:
obtain a target time domain resource assignment record corresponding to each PDSCH bundling group that corresponds to a target effective feedback time offset;
obtain at least one time domain resource assignment record subset based on the target time domain resource assignment record; and
determine one candidate transmission occasion for a target effective feedback time offset corresponding to each time domain resource assignment record subset in the at least one time domain resource assignment record subset.

Specifically, a manner of obtaining the target time domain resource assignment record corresponding to the PDSCH bundling group includes one of the following:
determining the last time domain resource assignment record corresponding to the PDSCH bundling group as the target time domain resource assignment record;
determining the 1 st time domain resource assignment record corresponding to the PDSCH bundling group as the target time domain resource assignment record;
determining the 1st time domain resource assignment record corresponding to the PDSCH bundling group in the last time unit as the target time domain resource assignment record;
determining a time domain resource assignment record with a preset index corresponding to the PDSCH bundling group as the target time domain resource assignment record; and
determining a time domain resource assignment record with a preset index corresponding to the PDSCH bundling group in the last time unit as the target time domain resource assignment record.

Optionally, the target time domain resource assignment record includes one of the following:
a time domain resource assignment record corresponding to a preset PDSCH that corresponds to the PDSCH bundling group; and
a combined time domain resource assignment record obtained by combining time domain resource assignment records corresponding to at least two PDSCHs occupying adjacent consecutive symbols of a same downlink time unit in the PDSCH bundling group.

Optionally, in a case that the bundling granularity is a PDSCH bundling group corresponding to each of all first PDSCH reception(s) being determined based on a division rule, the processor 610 is configured to:
determine, based on a correspondence between all PDSCH bundling groups scheduled when one piece of DCI indicates one row of a time domain resource assignment table and candidate transmission occasions, a candidate transmission occasion subset corresponding to each effective feedback time offset.
the correspondence includes at least one of the following:
   all PDSCH bundling groups scheduled when one piece of DCI indicates one row of a time domain resource assignment table correspond to a same candidate transmission occasion; and
   each PDSCH bundling group in all PDSCH bundling groups scheduled when one piece of DCI indicates one row of a time domain resource assignment table corresponds to a different candidate transmission occasion.

Optionally, in a case that the correspondence is all PDSCH bundling groups scheduled when one piece of DCI indicates one row of a time domain resource assignment table being corresponding to a same candidate transmission occasion, the processor 610 is further configured to:
delete a first PDSCH bundling group in the PDSCH bundling group subset; where
the first PDSCH bundling group is a PDSCH bundling group other than the last PDSCH bundling group in all PDSCH bundling groups that are scheduled when one piece of DCI indicates a second target row of the time domain resource assignment table, and the second target row is any row in the time domain resource assignment table.

Optionally, in a case that the correspondence is all PDSCH bundling groups scheduled when one piece of DCI indicates one row of a time domain resource assignment table being corresponding to a same candidate transmission occasion, the processor 610 is configured to:
determine, based on a second PDSCH bundling group, the effective feedback time offset set and the PDSCH bundling group subset corresponding to each effective feedback time offset in the effective feedback time offset set; where
the second PDSCH bundling group is the last PDSCH bundling group in all PDSCH bundling groups that are scheduled when one piece of DCI indicates a third target row of the time domain resource assignment table, and the third target row is any row in the time domain resource assignment table.

Optionally, in a case that the correspondence is all PDSCH bundling groups scheduled when one piece of DCI indicates one row of a time domain resource assignment table being corresponding to a same candidate transmission occasion, the processor 610 is configured to:
determine that each candidate transmission occasion corresponds to N copies of HARQ-ACK bits; and
determine the HARQ-ACK bit sequence based on the N copies of HARQ-ACK bits corresponding to each candidate transmission occasion; where
N is an integer greater than or equal to 1.

Specifically, Ns corresponding to different candidate transmission occasions are determined in one of the following manners:
N corresponding to each candidate transmission occasion is determined based on a maximum value of first values corresponding to a third target PDSCH bundling group that corresponds to the target candidate transmission occasion, where the third target PDSCH bundling group is any PDSCH bundling group corresponding to the candidate transmission occasion; and
N corresponding to each candidate transmission occasion is determined based on a maximum value of second values corresponding to a fourth target PDSCH bundling group that corresponds to the target candidate transmission occasion, where the target candidate transmission occasion is one of candidate transmission occasions corresponding to each effective feedback time offset in the effective feedback time offset set, and the fourth target PDSCH bundling group is any PDSCH bundling group corresponding to the target candidate transmission occasion; where
the first value is the number of PDSCH bundling groups obtained by scheduling when a single piece of DCI indicates one row of the time domain resource assignment table, and the PDSCH bundling groups obtained by scheduling include the third target PDSCH bundling group; and the second value is the number of PDSCH bundling groups obtained by scheduling when a single piece of DCI indicates one row of the time domain resource assignment table, and the PDSCH bundling groups obtained by scheduling include the fourth target PDSCH bundling group.

Optionally, the radio frequency unit 601 is configured to send the HARQ-ACK bit sequence to a network-side device.

Preferentially, an embodiment of this application further provides a terminal, including a processor, a memory, and a program or instructions stored in the memory and capable of running on the processor. When the program or instructions are executed by the processor, the processes of the foregoing codebook determination method are implemented, with the same technical effects achieved. To avoid repetition, details are not described herein again.

An embodiment of this application further provides a readable storage medium, where a program or instructions are stored in the readable storage medium. When the program or instructions are executed by a processor, the processes of the foregoing embodiment of the codebook determination method can be implemented, with the same technical effects achieved. To avoid repetition, details are not described herein again. The computer-readable storage medium is, for example, a read-only memory (Read-Only Memory, ROM for short), a random access memory (Random Access Memory, RAM for short), a magnetic disk, or an optical disc.

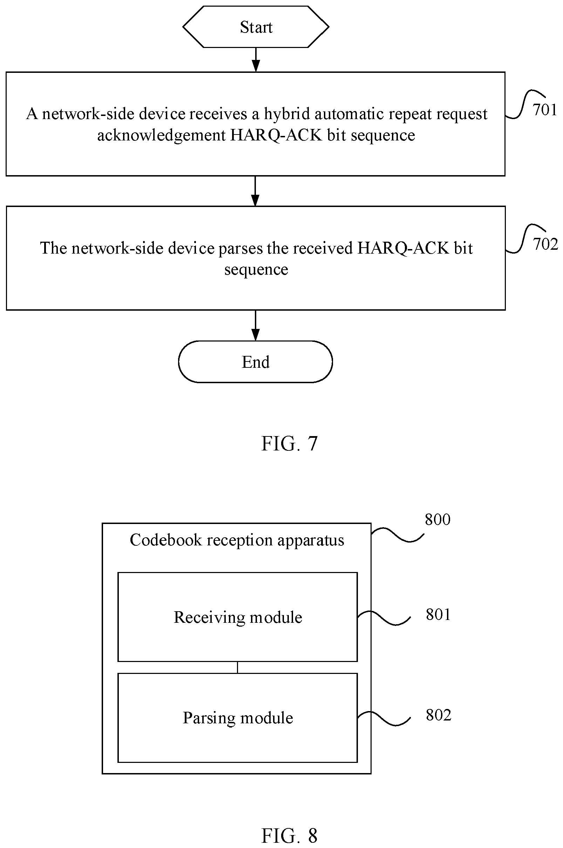

As shown in FIG. 7, an embodiment of this application further provides a codebook reception method including:
Step 701: A network-side device receives a hybrid automatic repeat request acknowledgement HARQ-ACK bit sequence.
Step 702: The network-side device parses the received HARQ-ACK bit sequence.

The HARQ-ACK bit sequence is determined by a terminal based on a candidate transmission occasion set that is determined based on a bundling granularity.

Optionally, before the step 701, the following is further included:
determining a candidate transmission occasion set based on the bundling granularity; and
determining, based on the candidate transmission occasion set, a length of the HARQ-ACK bit sequence and a mapping relationship between bits in the HARQ-ACK bit sequence and candidate transmission occasions in the candidate transmission occasion set.

Optionally, a manner of determining the bundling granularity includes at least one of the following:
all first PDSCH reception(s) belonging to a same PDSCH bundling group; and
a PDSCH bundling group corresponding to each of all first PDSCH reception(s) being determined based on a division rule; where
the first PDSCH reception(s) are PDSCH reception(s) scheduled when a single piece of downlink control information DCI indicates one row of a time domain resource assignment table.

Optionally, the division rule includes at least one of the following:
all PDSCH reception(s) in the first PDSCH reception(s) that are located within a same time unit belong to a same PDSCH bundling group; and
all PDSCH reception(s) contiguous in time domain, which consist of at least one PDSCH reception, in the first PDSCH reception(s) belong to a same PDSCH bundling group.

Optionally, the determining a candidate transmission occasion set based on the bundling granularity includes:
determining, based on the bundling granularity, an effective feedback time offset set and a PDSCH bundling group subset corresponding to each effective feedback time offset in the effective feedback time offset set;
determining, based on the PDSCH bundling group subset corresponding to each effective feedback time offset in the effective feedback time offset set, a candidate transmission occasion subset corresponding to each effective feedback time offset; and
obtaining a candidate transmission occasion set based on the candidate transmission occasion subset corresponding to each effective feedback time offset.

Optionally, the determining, based on the bundling granularity, an effective feedback time offset set and a PDSCH bundling group subset corresponding to each effective feedback time offset in the effective feedback time offset set includes:
performing deletion processing on row(s), each of which conflicts with semi-static uplink symbol(s), in a time domain resource assignment table; and
determining, based on the time domain resource assignment table after deletion processing and the bundling granularity, the effective feedback time offset set and the PDSCH bundling group subset corresponding to each effective feedback time offset in the effective feedback time offset set.

Optionally, the performing deletion processing on row(s), each of which conflicts with semi-static uplink symbol(s), in a time domain resource assignment table includes:
for each row in the time domain resource assignment table, in a case that there is a first target row satisfying a first preset condition, deleting the first target row from the time domain resource assignment table; where
the first preset condition is that at least one symbol of symbols occupied by any PDSCH corresponding to the first target row conflicts with semi-static uplink symbol(s).

Optionally, the determining, based on the PDSCH bundling group subset corresponding to each effective feedback time offset in the effective feedback time offset set, a candidate transmission occasion subset corresponding to each effective feedback time offset includes:
performing deletion processing on PDSCH bundling group(s), each of which conflicts with semi-static uplink symbol(s), in the PDSCH bundling group subset corresponding to each effective feedback time offset; and
determining, based on the corresponding PDSCH bundling group subset after deletion processing, a corresponding candidate transmission occasion subset, for each effective feedback time offset.

Optionally, the performing deletion processing on PDSCH bundling group(s), each of which conflicts with semi-static uplink symbol(s), in the PDSCH bundling group subset corresponding to each effective feedback time offset includes:
for the PDSCH bundling group subset corresponding to each effective feedback time offset, in a case that there are first target PDSCH bundling group(s) in the PDSCH bundling group subset, each of which satisfies a second preset condition, deleting each of the first target PDSCH bundling group(s) from the PDSCH bundling group subset; where
the second preset condition is that at least one symbol of symbols occupied by any PDSCH in a first target PDSCH bundling group conflicts with semi-static uplink symbol(s).

Optionally, in a case that the bundling granularity is all first PDSCH receptions belonging to a same PDSCH bundling group, a manner of determining the effective feedback time offset includes:
the effective feedback time offset corresponding to one PDSCH bundling group being indicated by DCI or configured by higher layer.

Optionally, in a case that the bundling granularity is a PDSCH bundling group corresponding to each of all first PDSCH reception(s) being determined based on a division rule, a manner of determining the effective feedback time offset includes:
the effective feedback time offset corresponding to one PDSCH bundling group being indicated by DCI or configured by higher layer; or
the effective feedback time offset corresponding to one PDSCH bundling group being determined by the terminal based on an indication in DCI and a preset rule.

Optionally, the determining, based on the PDSCH bundling group subset corresponding to each effective feedback time offset in the effective feedback time offset set, a candidate transmission occasion subset corresponding to each effective feedback time offset includes:
determining, based on a mapping relationship between PDSCH bundling groups and candidate transmission occasions, a candidate transmission occasion subset corresponding to each effective feedback time offset; where
the mapping relationship includes at least one of the following:
   a candidate transmission occasion being determined based on a target time domain resource assignment record corresponding to a PDSCH bundling group; and
   a candidate transmission occasion being determined based on whether PDSCH bundling groups overlap in time domain.

Optionally, in a case that the mapping relationship is the candidate transmission occasion being determined based on the target time domain resource assignment record corresponding to the PDSCH bundling group, before the determining, based on a mapping relationship between PDSCH bundling groups and candidate transmission occasions, a candidate transmission occasion corresponding to each effective feedback time offset, the following is further included:
in a case that a second target PDSCH bundling group in the PDSCH bundling group subset corresponding to each effective feedback time offset satisfies a third preset condition, deleting the second target PDSCH bundling group; where
the third preset condition is that at least one symbol of symbols occupied by a target time domain resource assignment record corresponding to the second target PDSCH bundling group conflicts with semi-static uplink symbol(s).

Optionally, the determining a candidate transmission occasion based on a target time domain resource assignment record corresponding to a PDSCH bundling group includes:
obtaining a target time domain resource assignment record corresponding to each PDSCH bundling group that corresponds to a target effective feedback time offset;
obtaining at least one time domain resource assignment record subset based on the target time domain resource assignment record; and
determining one candidate transmission occasion for a target effective feedback time offset corresponding to each time domain resource assignment record subset in the at least one time domain resource assignment record subset.

Optionally, a manner of obtaining the target time domain resource assignment record corresponding to the PDSCH bundling group includes one of the following:
determining the last time domain resource assignment record corresponding to the PDSCH bundling group as the target time domain resource assignment record;
determining the 1st time domain resource assignment record corresponding to the PDSCH bundling group as the target time domain resource assignment record;
determining the 1st time domain resource assignment record corresponding to the PDSCH bundling group in the last time unit as the target time domain resource assignment record;
determining a time domain resource assignment record with a preset index corresponding to the PDSCH bundling group as the target time domain resource assignment record; and
determining a time domain resource assignment record with a preset index corresponding to the PDSCH bundling group in the last time unit as the target time domain resource assignment record.

Optionally, the target time domain resource assignment record includes one of the following:
a time domain resource assignment record corresponding to a preset PDSCH that corresponds to the PDSCH bundling group; and
a combined time domain resource assignment record obtained by combining time domain resource assignment records corresponding to at least two PDSCHs occupying adjacent consecutive symbols of a same downlink time unit in the PDSCH bundling group.

Optionally, in a case that the bundling granularity is a PDSCH bundling group corresponding to each of all first PDSCH reception(s) being determined based on a division rule, the determining, based on the PDSCH bundling group subset corresponding to each effective feedback time offset in the effective feedback time offset set, a candidate transmission occasion subset corresponding to each effective feedback time offset includes:
determining, based on a correspondence between all PDSCH bundling groups scheduled when one piece of DCI indicates one row of a time domain resource assignment table and candidate transmission occasions, a candidate transmission occasion subset corresponding to each effective feedback time offset; where
the correspondence includes at least one of the following:
   all PDSCH bundling groups scheduled when one piece of DCI indicates one row of a time domain resource assignment table correspond to a same candidate transmission occasion; and
   each PDSCH bundling group in all PDSCH bundling groups scheduled when one piece of DCI indicates one row of a time domain resource assignment table corresponds to a different candidate transmission occasion.

Optionally, in a case that the correspondence is all PDSCH bundling groups scheduled when one piece of DCI indicates one row of a time domain resource assignment table being corresponding to a same candidate transmission occasion, after the determining an effective feedback time offset set and a PDSCH bundling group subset corresponding to each effective feedback time offset in the effective feedback time offset set, the following is further included:
deleting a first PDSCH bundling group in the PDSCH bundling group subset; where
the first PDSCH bundling group is a PDSCH bundling group other than the last PDSCH bundling group in all PDSCH bundling groups that are scheduled when one piece of DCI indicates a second target row of the time domain resource assignment table, and the second target row is any row in the time domain resource assignment table.

Optionally, in a case that the correspondence is all PDSCH bundling groups scheduled when one piece of DCI indicates one row of a time domain resource assignment table being corresponding to a same candidate transmission occasion, after the determining an effective feedback time offset set and a PDSCH bundling group subset corresponding to each effective feedback time offset in the effective feedback time offset set, the following is included:
determining, based on a second PDSCH bundling group, the effective feedback time offset set and the PDSCH bundling group subset corresponding to each effective feedback time offset in the effective feedback time offset set; where
the second PDSCH bundling group is the last PDSCH bundling group in all PDSCH bundling groups that are scheduled when one piece of DCI indicates a third target row of the time domain resource assignment table, and the third target row is any row in the time domain resource assignment table.

Optionally, in a case that the correspondence is all PDSCH bundling groups scheduled when one piece of DCI indicates one row of a time domain resource assignment table being corresponding to a same candidate transmission occasion, the determining, based on the candidate transmission occasion set, a length of the HARQ-ACK bit sequence and a mapping relationship between bits in the HARQ-ACK bit sequence and candidate transmission occasions in the candidate transmission occasion set includes:
determining that each candidate transmission occasion corresponds to N copies of HARQ-ACK bits; and
determining the length of the HARQ-ACK bit sequence based on the N copies of HARQ-ACK bits corresponding to each candidate transmission occasion; where
N is an integer greater than or equal to 1.

Optionally, Ns corresponding to different candidate transmission occasions are determined in one of the following manners:
N corresponding to each candidate transmission occasion is determined based on a maximum value of first values corresponding to a third target PDSCH bundling group that corresponds to the target candidate transmission occasion, where the third target PDSCH bundling group is any PDSCH bundling group corresponding to the candidate transmission occasion; and
N corresponding to each candidate transmission occasion is determined based on a maximum value of second values corresponding to a fourth target PDSCH bundling group that corresponds to the target candidate transmission occasion, where the target candidate transmission occasion is one of candidate transmission occasions corresponding to each effective feedback time offset in the effective feedback time offset set, and the fourth target PDSCH bundling group is any PDSCH bundling group corresponding to the target candidate transmission occasion; where
the first value is the number of PDSCH bundling groups obtained by scheduling when a single piece of DCI indicates one row of the time domain resource assignment table, and the PDSCH bundling groups obtained by scheduling include the third target PDSCH bundling group; and the second value is the number of PDSCH bundling groups obtained by scheduling when a single piece of DCI indicates one row of the time domain resource assignment table, and the PDSCH bundling groups obtained by scheduling include the fourth target PDSCH bundling group.

It should be also noted herein that a manner used by the terminal for setting the HARQ-ACK bit sequence is the same as a manner used by the network-side device for parsing the HARQ-ACK bit sequence, that is, for the same HARQ-ACK bit sequence, understanding of the terminal and the network-side device is consistent.

It should be noted that for all implementations same as those on the terminal side in the embodiments of this application, reference may be made to the description of the terminal side and details are not repeated herein.

As shown in FIG. 8, an embodiment of this application further provides a codebook reception apparatus 800 including:
a receiving module 801, configured to receive a hybrid automatic repeat request acknowledgement HARQ-ACK bit sequence; and
a parsing module 802, configured to parse the received HARQ-ACK bit sequence; where
the HARQ-ACK bit sequence is determined by a terminal based on a candidate transmission occasion set that is determined based on a bundling granularity.

Optionally, before the receiving module 801 receives a hybrid automatic repeat request acknowledgement HARQ-ACK bit sequence, the following is further included:
a third determining module, configured to determine a candidate transmission occasion set based on a bundling granularity; and
a fourth determining module, configured to determine, based on the candidate transmission occasion set, a length of the HARQ-ACK bit sequence and a mapping relationship between bits in the HARQ-ACK bit sequence and candidate transmission occasions in the candidate transmission occasion set.

Optionally, the third determining module includes:
a fifth determining unit, configured to determine, based on the bundling granularity, an effective feedback time offset set and a PDSCH bundling group subset corresponding to each effective feedback time offset in the effective feedback time offset set;
a sixth determining unit, configured to determine, based on the PDSCH bundling group subset corresponding to each effective feedback time offset in the effective feedback time offset set, a candidate transmission occasion subset corresponding to each effective feedback time offset; and
a second obtaining unit, configured to obtain a candidate transmission occasion set based on the candidate transmission occasion subset corresponding to each effective feedback time offset.

Optionally, the fifth determining unit includes:
a third processing subunit, configured to perform deletion processing on row(s), each of which conflicts with semi-static uplink symbol(s), in a time domain resource assignment table; and
a third determining subunit, configured to determine, based on the time domain resource assignment table after deletion processing and the bundling granularity, the effective feedback time offset set and the PDSCH bundling group subset corresponding to each effective feedback time offset in the effective feedback time offset set.

Optionally, the third processing subunit is configured to:
for each row in the time domain resource assignment table, in a case that there is a first target row satisfying a first preset condition, delete the first target row from the time domain resource assignment table; where
the first preset condition is that at least one symbol of symbols occupied by any PDSCH corresponding to the first target row conflicts with semi-static uplink symbol(s).

Optionally, the sixth determining unit includes:
a fourth processing subunit, configured to perform deletion processing on PDSCH bundling group(s), each of which conflicts with semi-static uplink symbol(s), in the PDSCH bundling group subset corresponding to each effective feedback time offset; and
a fourth determining subunit, configured to determine, based on the corresponding PDSCH bundling group subset after deletion processing, a corresponding candidate transmission occasion subset, for each effective feedback time offset.

Optionally, the fourth processing subunit is configured to:
for the PDSCH bundling group subset corresponding to each effective feedback time offset, in a case that there are first target PDSCH bundling group(s) in the PDSCH bundling group subset, each of which satisfies a second preset condition, delete each of the first target PDSCH bundling group(s) from the PDSCH bundling group subset; where
the second preset condition is that at least one symbol of symbols occupied by any PDSCH in a first target PDSCH bundling group conflicts with semi-static uplink symbol(s).

Optionally, in a case that the bundling granularity is all first PDSCH receptions belonging to a same PDSCH bundling group, a manner of determining the effective feedback time offset includes:
the effective feedback time offset corresponding to one PDSCH bundling group being indicated by DCI or configured by higher layer.

Optionally, in a case that the bundling granularity is a PDSCH bundling group corresponding to each of all first PDSCH reception(s) being determined based on a division rule, a manner of determining the effective feedback time offset includes:
the effective feedback time offset corresponding to one PDSCH bundling group being indicated by DCI or configured by higher layer; or
the effective feedback time offset corresponding to one PDSCH bundling group being determined by the terminal based on an indication in DCI and a preset rule.

Optionally, the sixth determining unit is configured to:
determine, based on a mapping relationship between PDSCH bundling groups and candidate transmission occasions, a candidate transmission occasion subset corresponding to each effective feedback time offset; where
the mapping relationship includes at least one of the following:
   a candidate transmission occasion being determined based on a target time domain resource assignment record corresponding to a PDSCH bundling group; and
   a candidate transmission occasion being determined based on whether PDSCH bundling groups overlap in time domain.

Optionally, in a case that the mapping relationship is the candidate transmission occasion being determined based on the target time domain resource assignment record corresponding to the PDSCH bundling group, before the second determining unit determines, based on a mapping relationship between PDSCH bundling groups and candidate transmission occasions, a candidate transmission occasion corresponding to each effective feedback time offset, the following is further included:
a third processing unit, configured to: in a case that a second target PDSCH bundling group in the PDSCH bundling group subset corresponding to each effective feedback time offset satisfies a third preset condition, delete the second target PDSCH bundling group; where
the third preset condition is that at least one symbol of symbols occupied by a target time domain resource assignment record corresponding to the second target PDSCH bundling group conflicts with semi-static uplink symbol(s).

Optionally, an implementation of determining a candidate transmission occasion based on a target time domain resource assignment record corresponding to a PDSCH bundling group includes:
obtaining a target time domain resource assignment record corresponding to each PDSCH bundling group that corresponds to a target effective feedback time offset;
obtaining at least one time domain resource assignment record subset based on the target time domain resource assignment record; and
determining one candidate transmission occasion for a target effective feedback time offset corresponding to each time domain resource assignment record subset in the at least one time domain resource assignment record subset.

Optionally, a manner of obtaining the target time domain resource assignment record corresponding to the PDSCH bundling group includes one of the following:
determining the last time domain resource assignment record corresponding to the PDSCH bundling group as the target time domain resource assignment record;
determining the 1st time domain resource assignment record corresponding to the PDSCH bundling group as the target time domain resource assignment record;
determining the 1st time domain resource assignment record corresponding to the PDSCH bundling group in the last time unit as the target time domain resource assignment record;
determining a time domain resource assignment record with a preset index corresponding to the PDSCH bundling group as the target time domain resource assignment record; and
determining a time domain resource assignment record with a preset index corresponding to the PDSCH bundling group in the last time unit as the target time domain resource assignment record.

Specifically, the target time domain resource assignment record includes one of the following:
a time domain resource assignment record corresponding to a preset PDSCH that corresponds to the PDSCH bundling group; and
a combined time domain resource assignment record obtained by combining time domain resource assignment records corresponding to at least two PDSCHs occupying adjacent consecutive symbols of a same downlink time unit in the PDSCH bundling group.

Optionally, the sixth determining unit is configured to:
determine, based on a correspondence between all PDSCH bundling groups scheduled when one piece of DCI indicates one row of a time domain resource assignment table and candidate transmission occasions, a candidate transmission occasion subset corresponding to each effective feedback time offset.

The correspondence includes at least one of the following:
all PDSCH bundling groups scheduled when one piece of DCI indicates one row of a time domain resource assignment table correspond to a same candidate transmission occasion; and
each PDSCH bundling group in all PDSCH bundling groups scheduled when one piece of DCI indicates one row of a time domain resource assignment table corresponds to a different candidate transmission occasion.

Optionally, in a case that the correspondence is all PDSCH bundling groups scheduled when one piece of DCI indicates one row of a time domain resource assignment table being corresponding to a same candidate transmission occasion, after the sixth determining unit determines an effective feedback time offset set and a PDSCH bundling group subset corresponding to each effective feedback time offset in the effective feedback time offset set, the following is further included:
a fourth processing unit, configured to delete a first PDSCH bundling group in the PDSCH bundling group subset, where
the first PDSCH bundling group is a PDSCH bundling group other than the last PDSCH bundling group in all PDSCH bundling groups that are scheduled when one piece of DCI indicates a second target row of the time domain resource assignment table, and the second target row is any row in the time domain resource assignment table.

Optionally, in a case that the correspondence is all PDSCH bundling groups scheduled when one piece of DCI indicates one row of a time domain resource assignment table being corresponding to a same candidate transmission occasion, the sixth determining unit is configured to:
determine, based on a second PDSCH bundling group, the effective feedback time offset set and the PDSCH bundling group subset corresponding to each effective feedback time offset in the effective feedback time offset set; where
the second PDSCH bundling group is the last PDSCH bundling group in all PDSCH bundling groups that are scheduled when one piece of DCI indicates a third target row of the time domain resource assignment table, and the third target row is any row in the time domain resource assignment table.

Optionally, in a case that the correspondence is all PDSCH bundling groups scheduled when one piece of DCI indicates one row of a time domain resource assignment table being corresponding to a same candidate transmission occasion, the fourth determining module includes:
a seventh determining unit, configured to determine that each candidate transmission occasion corresponds to N copies of HARQ-ACK bits; and
an eighth determining unit, configured to determine a length of the HARQ-ACK bit sequence based on the N copies of HARQ-ACK bits corresponding to each candidate transmission occasion; where
N is an integer greater than or equal to 1.

Optionally, Ns corresponding to different candidate transmission occasions are determined in one of the following manners:
N corresponding to each candidate transmission occasion is determined based on a maximum value of first values corresponding to a third target PDSCH bundling group that corresponds to the target candidate transmission occasion, where the third target PDSCH bundling group is any PDSCH bundling group corresponding to the candidate transmission occasion; and
N corresponding to each candidate transmission occasion is determined based on a maximum value of second values corresponding to a fourth target PDSCH bundling group that corresponds to the target candidate transmission occasion, where the target candidate transmission occasion is one of candidate transmission occasions corresponding to each effective feedback time offset in the effective feedback time offset set, and the fourth target PDSCH bundling group is any PDSCH bundling group corresponding to the target candidate transmission occasion; where
the first value is the number of PDSCH bundling groups obtained by scheduling when a single piece of DCI indicates one row of the time domain resource assignment table, and the PDSCH bundling groups obtained by scheduling include the third target PDSCH bundling group; and the second value is the number of PDSCH bundling groups obtained by scheduling when a single piece of DCI indicates one row of the time domain resource assignment table, and the PDSCH bundling groups obtained by scheduling include the fourth target PDSCH bundling group.

It should be noted that this embodiment of this application is an apparatus in one-to-one correspondence to the above method, and the implementations of the above method can be all applied to the apparatus embodiment, with the same technical effects corresponding to the above method achieved.

Preferentially, an embodiment of this application further provides a network-side device, including a processor, a memory, and a program or instructions stored in the memory and capable of running on the processor. When the program or instructions are executed by the processor, the processes of the foregoing codebook reception method on the network-side device side are implemented, with the same technical effects achieved. To avoid repetition, details are not described herein again.

An embodiment of this application further provides a readable storage medium, where a program or instructions are stored in the computer readable storage medium. When the program or instructions are executed by a processor, the processes of the foregoing codebook reception method on the network-side device side can be implemented, with the same technical effects achieved. To avoid repetition, details are not described herein again.

The computer-readable storage medium is, for example, a read-only memory (Read-Only Memory, ROM for short), a random access memory (Random Access Memory, RAM for short), a magnetic disk, or an optical disc.

An embodiment of this application further provides a network-side device, including a processor and a communication interface, and the communication interface is configured to: receive a hybrid automatic repeat request acknowledgement HARQ-ACK bit sequence; where
the HARQ-ACK bit sequence is determined by a terminal based on a candidate transmission occasion set that is determined based on a bundling granularity.

The network-side device embodiments correspond to the foregoing network-side device method embodiments, and the implementation processes and implementations of the foregoing method embodiments can be applied to the network-side device embodiments, with the same technical effects achieved.

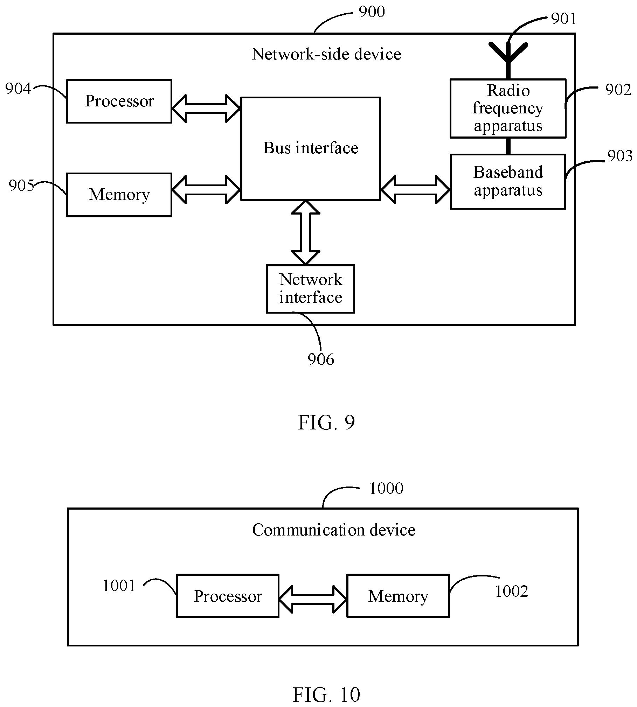

Specifically, an embodiment of this application further provides a network-side device. As shown in FIG. 9, the network-side device 900 includes an antenna 91, a radio frequency apparatus 92, and a baseband apparatus 93. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes to-be-sent information, and sends the information to the radio frequency apparatus 92; and the radio frequency apparatus 92 processes the received information and then sends the information out by using the antenna 91.

The frequency band processing apparatus may be located in the baseband apparatus 93. The method performed by the network-side device in the foregoing embodiments may be implemented in the baseband apparatus 93, and the baseband apparatus 93 includes a processor 94 and a memory 95.

The baseband apparatus 93 may include, for example, at least one baseband processing unit, where a plurality of chips are disposed on the baseband processing unit. As shown in FIG. 9, one of the chips is, for example, the processor 94, connected to the memory 95, to invoke a program in the memory 95 to perform the operation of the network-side device shown in the foregoing method embodiment.

The baseband apparatus 93 may further include a network interface 96, configured to exchange information with the radio frequency apparatus 92, where the interface is, for example, a common public radio interface (common public radio interface, CPRI for short).

Specifically, the network-side device in this embodiment of the present invention further includes: instructions or a program stored in the memory 95 and capable of running on the processor 94. The processor 94 invokes the instructions or program in the memory 95 to execute the method executed by the modules shown in FIG. 8, with the same technical effects achieved. To avoid repetition, details are not repeated herein.

Optionally, as shown in FIG. 10, an embodiment of this application further provides a communication device 1000, including a processor 1001, a memory 1002, and a program or instructions stored in the memory 1002 and capable of running on the processor 1001. For example, when the communication device 1000 is a terminal and when the program or the instructions are executed by the processor 1001, the processes of the foregoing embodiment of the codebook determination method are implemented, with the same technical effects achieved. When the communication device 1000 is a network-side device and when the program or the instructions are executed by the processor 1001, the processes of the foregoing embodiment of the codebook reception method are implemented, with the same technical effects achieved. To avoid repetition, details are not described herein again.

The terminal included in the embodiments of this application may be a device that provides a user with voice and/or data connectivity, a handheld device with a wireless connection function, another processing device connected to a wireless modem, or the like. In different systems, the name of the terminal device may be different, for example, in a 5G system, the terminal device may be referred to as user equipment (User Equipment, UE). A wireless terminal device may communicate with one or more core networks (Core Network, CN) through a radio access network (Radio Access Network, RAN). The wireless terminal device may be a mobile terminal device, such as a mobile phone (or referred to as a "cellular" phone) or a computer with a mobile terminal device. For example, the wireless terminal device may be a portable, pocket-sized, handheld, computer built-in, or in-vehicle mobile apparatus, which exchanges voice and/or data with the radio access network. For example, the wireless terminal device may be a device such as a personal communication service (Personal Communication Service, PCS) phone, a cordless telephone set, a session initiation protocol (Session Initiated Protocol, SIP) phone, a wireless local loop (Wireless Local Loop, WLL) station, or a personal digital assistant (Personal Digital Assistant, PDA). The wireless terminal device may also be referred to a system, a subscriber unit (subscriber unit), a subscriber station (subscriber station), a mobile station (mobile station), a mobile (mobile), a remote station (remote station), an access point (access point), a remote terminal (remote terminal), an access terminal device (access terminal), a user terminal device (user terminal), a user agent (user agent), or a user device (user device), which is not limited in the embodiments of this application.

The network-side device included in the embodiments of this application may be a base transceiver station (Base Transceiver Station, BTS for short) in a Global System for Mobile Communications (Global System of Mobile Communications, GSM for short) or Code Division Multiple Access (Code Division Multiple Access, CDMA for short), or may be a NodeB (NodeB, NB for short) in Wideband Code Division Multiple Access (Wideband Code Division Multiple Access, WCDMA for short), or may be an evolved NodeB (Evolutional NodeB, eNB or eNodeB for short), a relay station, or an access point in LTE, or may be a base station in a future 5G network, or the like, and is not limited herein.

Multi input multi output (Multi Input Multi Output, MIMO) transmission may be performed between the network-side device and the terminal using one or more antennas each, and the MIMO transmission may be single-user MIMO (Single User MIMO, SU-MIMO) or multi-user MIMO (Multiple User MIMO, MU- MIMO). Based on shape and the number of root antenna combinations, the MIMO transmission may be two-dimensional MIMO (2Dimission MIMO, 2D-MIMO), three-dimensional MIMO (3Dimission MIMO, 3D-MIMO), full-dimension MIMO (Full-Dimension, FD-MIMO), or massive-MIMO (massive-MIMO), or may be diversity transmission, precoded transmission, beamforming transmission, or the like.

An embodiment of this application further provides a chip, where the chip includes a processor and a communication interface. The communication interface is coupled to the processor, and the processor is configured to run a program or instructions to implement the processes of the foregoing embodiments of the codebook determination method or the codebook reception method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application provides a communication device, configured to perform the processes of the foregoing method embodiments, with the same technical effects achieved. To avoid repetition, details are not described herein.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the foregoing description of the implementations, persons skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A codebook determination method, comprising:
determining, by a terminal, a candidate transmission occasion set based on a bundling granularity, wherein the bundling granularity is used for determining a correspondence between physical downlink shared channel PDSCHs and PDSCH bundling groups; and
determining, by the terminal, a hybrid automatic repeat request acknowledgement HARQ-ACK bit sequence based on the candidate transmission occasion set.

2. The method according to claim 1, wherein a manner of determining the bundling granularity comprises at least one of the following:
all first PDSCH reception(s) belonging to a same PDSCH bundling group; and
a PDSCH bundling group corresponding to each of all first PDSCH reception(s) being determined based on a division rule; wherein
the first PDSCH reception(s) are PDSCH reception(s) scheduled when a single piece of downlink control information DCI indicates one row of a time domain resource assignment table.

3. The method according to claim 2, wherein the division rule comprises at least one of the following:
all PDSCH reception(s) in the first PDSCH reception(s) that are located within a same time unit belong to a same PDSCH bundling group; and
all PDSCH reception(s) contiguous in time domain, which consist of at least one PDSCH reception, in the first PDSCH reception(s) belong to a same PDSCH bundling group.

4. The method according to claim 1, wherein the determining, by a terminal, a candidate transmission occasion set based on a bundling granularity comprises:
determining, based on the bundling granularity, an effective feedback time offset set and a PDSCH bundling group subset corresponding to each effective feedback time offset in the effective feedback time offset set;
determining, based on the PDSCH bundling group subset corresponding to each effective feedback time offset in the effective feedback time offset set, a candidate transmission occasion subset corresponding to each effective feedback time offset; and
obtaining a candidate transmission occasion set based on the candidate transmission occasion subset corresponding to each effective feedback time offset.

5. The method according to claim 4, wherein the determining, based on the bundling granularity, an effective feedback time offset set and a PDSCH bundling group subset corresponding to each effective feedback time offset in the effective feedback time offset set comprises:
performing deletion processing on row(s), each of which conflicts with semi-static uplink symbol(s), in a time domain resource assignment table; and
determining, based on the time domain resource assignment table after deletion processing and the bundling granularity, the effective feedback time offset set and the PDSCH bundling group subset corresponding to each effective feedback time offset in the effective feedback time offset set.

6. The method according to claim 5, wherein the performing deletion processing on row(s), each of which conflicts with semi-static uplink symbol(s), in a time domain resource assignment table comprises:
for each row in the time domain resource assignment table, in a case that there is a first target row satisfying a first preset condition, deleting the first target row from the time domain resource assignment table; wherein
the first preset condition is that at least one symbol of symbols occupied by any PDSCH corresponding to the first target row conflicts with semi-static uplink symbol(s).

7. The method according to claim 4, wherein the determining, based on the PDSCH bundling group subset corresponding to each effective feedback time offset in the effective feedback time offset set, a candidate transmission occasion subset corresponding to each effective feedback time offset comprises:
performing deletion processing on PDSCH bundling group(s), each of which conflicts with semi-static uplink symbol(s), in the PDSCH bundling group subset corresponding to each effective feedback time offset; and
determining, based on the corresponding PDSCH bundling group subset after deletion processing, a corresponding candidate transmission occasion subset, for each effective feedback time offset.

8. The method according to claim 7, wherein the performing deletion processing on PDSCH bundling group(s), each of which conflicts with semi-static uplink symbol(s), in the PDSCH bundling group subset corresponding to each effective feedback time offset comprises:
for the PDSCH bundling group subset corresponding to each effective feedback time offset, in a case that there are first target PDSCH bundling group(s) in the PDSCH bundling group subset, each of which satisfies a second preset condition, deleting each of the first target PDSCH bundling group(s) from the PDSCH bundling group subset; wherein
the second preset condition is that at least one symbol of symbols occupied by any PDSCH in a first target PDSCH bundling group conflicts with semi-static uplink symbol(s).

9. The method according to any one of claims 4 to 8, wherein in a case that the bundling granularity is all first PDSCH receptions belonging to a same PDSCH bundling group, a manner of determining the effective feedback time offset comprises:
the effective feedback time offset corresponding to one PDSCH bundling group being indicated by DCI or configured by higher layer.

10. The method according to any one of claims 4 to 8, wherein in a case that the bundling granularity is a PDSCH bundling group corresponding to each of all first PDSCH reception(s) being determined based on a division rule, a manner of determining the effective feedback time offset comprises:
the effective feedback time offset corresponding to one PDSCH bundling group being indicated by DCI or configured by higher layer; or
the effective feedback time offset corresponding to one PDSCH bundling group being determined by the terminal based on an indication in DCI and a preset rule.

11. The method according to claim 4, wherein the determining, based on the PDSCH bundling group subset corresponding to each effective feedback time offset in the effective feedback time offset set, a candidate transmission occasion subset corresponding to each effective feedback time offset comprises:
determining, based on a mapping relationship between PDSCH bundling groups and candidate transmission occasions, a candidate transmission occasion subset corresponding to each effective feedback time offset; wherein
the mapping relationship comprises at least one of the following:
a candidate transmission occasion being determined based on a target time domain resource assignment record corresponding to a PDSCH bundling group; and
a candidate transmission occasion being determined based on whether PDSCH bundling groups overlap in time domain.

12. The method according to claim 11, in a case that the mapping relationship is the candidate transmission occasion being determined based on the target time domain resource assignment record corresponding to the PDSCH bundling group, before the determining, based on a mapping relationship between PDSCH bundling groups and candidate transmission occasions, a candidate transmission occasion corresponding to each effective feedback time offset, further comprising:
in a case that a second target PDSCH bundling group in the PDSCH bundling group subset corresponding to each effective feedback time offset satisfies a third preset condition, deleting the second target PDSCH bundling group; wherein
the third preset condition is that at least one symbol of symbols occupied by a target time domain resource assignment record corresponding to the second target PDSCH bundling group conflicts with semi-static uplink symbol(s).

13. The method according to claim 11, wherein the determining a candidate transmission occasion based on a target time domain resource assignment record corresponding to a PDSCH bundling group comprises:
obtaining a target time domain resource assignment record corresponding to each PDSCH bundling group that corresponds to a target effective feedback time offset;
obtaining at least one time domain resource assignment record subset based on the target time domain resource assignment record; and
determining one candidate transmission occasion for a target effective feedback time offset corresponding to each time domain resource assignment record subset in the at least one time domain resource assignment record subset.

14. The method according to claim 11, wherein a manner of obtaining the target time domain resource assignment record corresponding to the PDSCH bundling group comprises one of the following:
determining the last time domain resource assignment record corresponding to the PDSCH bundling group as the target time domain resource assignment record;
determining the 1st time domain resource assignment record corresponding to the PDSCH bundling group as the target time domain resource assignment record;
determining the 1 st time domain resource assignment record corresponding to the PDSCH bundling group in the last time unit as the target time domain resource assignment record;
determining a time domain resource assignment record with a preset index corresponding to the PDSCH bundling group as the target time domain resource assignment record; and
determining a time domain resource assignment record with a preset index corresponding to the PDSCH bundling group in the last time unit as the target time domain resource assignment record.

15. The method according to any one of claims 11 to 14, wherein the target time domain resource assignment record comprises one of the following:
a time domain resource assignment record corresponding to a preset PDSCH that corresponds to the PDSCH bundling group; and
a combined time domain resource assignment record obtained by combining time domain resource assignment records corresponding to at least two PDSCHs occupying adjacent consecutive symbols of a same downlink time unit in the PDSCH bundling group.

16. The method according to claim 4, wherein in a case that the bundling granularity is a PDSCH bundling group corresponding to each of all first PDSCH reception(s) being determined based on a division rule, the determining, based on the PDSCH bundling group subset corresponding to each effective feedback time offset in the effective feedback time offset set, a candidate transmission occasion subset corresponding to each effective feedback time offset comprises:
determining, based on a correspondence between all PDSCH bundling groups scheduled when one piece of DCI indicates one row of a time domain resource assignment table and candidate transmission occasions, a candidate transmission occasion subset corresponding to each effective feedback time offset; wherein
the correspondence comprises at least one of the following:
all PDSCH bundling groups scheduled when one piece of DCI indicates one row of a time domain resource assignment table correspond to a same candidate transmission occasion; and
each PDSCH bundling group in all PDSCH bundling groups scheduled when one piece of DCI indicates one row of a time domain resource assignment table corresponds to a different candidate transmission occasion.

17. The method according to claim 16, in a case that the correspondence is all PDSCH bundling groups scheduled when one piece of DCI indicates one row of a time domain resource assignment table being corresponding to a same candidate transmission occasion, after the determining an effective feedback time offset set and a PDSCH bundling group subset corresponding to each effective feedback time offset in the effective feedback time offset set, further comprising:
deleting a first PDSCH bundling group in the PDSCH bundling group subset; wherein
the first PDSCH bundling group is a PDSCH bundling group other than the last PDSCH bundling group in all PDSCH bundling groups that are scheduled when one piece of DCI indicates a second target row of the time domain resource assignment table, and the second target row is any row in the time domain resource assignment table.

18. The method according to claim 16, wherein in a case that the correspondence is all PDSCH bundling groups scheduled when one piece of DCI indicates one row of a time domain resource assignment table being corresponding to a same candidate transmission occasion, the determining an effective feedback time offset set and a PDSCH bundling group subset corresponding to each effective feedback time offset in the effective feedback time offset set comprises:
determining, based on a second PDSCH bundling group, the effective feedback time offset set and the PDSCH bundling group subset corresponding to each effective feedback time offset in the effective feedback time offset set; wherein
the second PDSCH bundling group is the last PDSCH bundling group in all PDSCH bundling groups that are scheduled when one piece of DCI indicates a third target row of the time domain resource assignment table, and the third target row is any row in the time domain resource assignment table.

19. The method according to claim 16, wherein in a case that the correspondence is all PDSCH bundling groups scheduled when one piece of DCI indicates one row of a time domain resource assignment table being corresponding to a same candidate transmission occasion, the determining, by the terminal, a hybrid automatic repeat request acknowledgement HARQ-ACK bit sequence based on the candidate transmission occasion set comprises:
determining that each candidate transmission occasion corresponds to N copies of HARQ-ACK bits; and
determining the HARQ-ACK bit sequence based on the N copies of HARQ-ACK bits corresponding to each candidate transmission occasion; wherein
N is an integer greater than or equal to 1.

20. The method according to claim 19, wherein Ns corresponding to different candidate transmission occasions are determined in one of the following manners:
N corresponding to each candidate transmission occasion is determined based on a maximum value of first values corresponding to a third target PDSCH bundling group that corresponds to the target candidate transmission occasion, wherein the third target PDSCH bundling group is any PDSCH bundling group corresponding to the candidate transmission occasion; and
N corresponding to each candidate transmission occasion is determined based on a maximum value of second values corresponding to a fourth target PDSCH bundling group that corresponds to the target candidate transmission occasion, wherein the target candidate transmission occasion is one of candidate transmission occasions corresponding to each effective feedback time offset in the effective feedback time offset set, and the fourth target PDSCH bundling group is any PDSCH bundling group corresponding to the target candidate transmission occasion; wherein
the first value is the number of PDSCH bundling groups obtained by scheduling when a single piece of DCI indicates one row of the time domain resource assignment table, and the PDSCH bundling groups obtained by scheduling comprise the third target PDSCH bundling group; and the second value is the number of PDSCH bundling groups obtained by scheduling when a single piece of DCI indicates one row of the time domain resource assignment table, and the PDSCH bundling groups obtained by scheduling comprise the fourth target PDSCH bundling group.

21. The method according to claim 1, after the determining, by the terminal, a hybrid automatic repeat request acknowledgement HARQ-ACK bit sequence based on the candidate transmission occasion set, further comprising:
sending, by the terminal, the HARQ-ACK bit sequence to a network-side device.

22. A codebook determination apparatus, comprising:
a first determining module, configured to determine a candidate transmission occasion set based on a bundling granularity, wherein the bundling granularity is used for determining a correspondence between physical downlink shared channel PDSCHs and PDSCH bundling groups; and
a second determining module, configured to determine a hybrid automatic repeat request acknowledgement HARQ-ACK bit sequence based on the candidate transmission occasion set.

23. A terminal, comprising a processor, a memory, and a program or an instruction stored in the memory and capable of running on the processor, wherein the program or the instruction is executed by the processor to implement the steps of the codebook determination method according to any one of claims 1 to 21.

24. A codebook reception method, comprising:
receiving, by a network-side device, a hybrid automatic repeat request acknowledgement HARQ-ACK bit sequence; and
parsing, by the network-side device, the received HARQ-ACK bit sequence; wherein
the HARQ-ACK bit sequence is determined by a terminal based on a candidate transmission occasion set that is determined based on a bundling granularity.

25. The method according to claim 24, before the receiving, by a network-side device, a hybrid automatic repeat request acknowledgement HARQ-ACK bit sequence, further comprising:
determining a candidate transmission occasion set based on the bundling granularity; and
determining, based on the candidate transmission occasion set, a length of the HARQ-ACK bit sequence and a mapping relationship between bits in the HARQ-ACK bit sequence and candidate transmission occasions in the candidate transmission occasion set.

26. The method according to claim 25, wherein the determining a candidate transmission occasion set based on the bundling granularity comprises:
determining, based on the bundling granularity, an effective feedback time offset set and a PDSCH bundling group subset corresponding to each effective feedback time offset in the effective feedback time offset set;
determining, based on the PDSCH bundling group subset corresponding to each effective feedback time offset in the effective feedback time offset set, a candidate transmission occasion subset corresponding to each effective feedback time offset; and
obtaining a candidate transmission occasion set based on the candidate transmission occasion subset corresponding to each effective feedback time offset.

27. A codebook reception apparatus, comprising:
a receiving module, configured to receive a hybrid automatic repeat request acknowledgement HARQ-ACK bit sequence; and
a parsing module, configured to parse the received HARQ-ACK bit sequence; wherein
the HARQ-ACK bit sequence is determined by a terminal based on a candidate transmission occasion set that is determined based on a bundling granularity.

28. A network-side device, comprising a processor, a memory, and a program or instructions stored in the memory and capable of running on the processor, wherein when the program or the instructions are executed by the processor, the steps of the codebook reception method according to any one of claims 24 to 26 are implemented.

29. A readable storage medium, wherein the readable storage medium stores a program or instructions, and when the program or instructions are executed by a processor, the steps of the codebook determination method according to any one of claims 1 to 21 are implemented, or the steps of the codebook reception method according to any one of claims 24 to 26 are implemented.

30. A chip, comprising a processor and a communication interface, wherein the communication interface is coupled to the processor, and the processor is configured to execute a program or instructions to implement the steps of the codebook determination method according to any one of claims 1 to 21 or the steps of the codebook reception method according to any one of claims 24 to 26.

31. A computer program product, wherein the computer program product is stored in a non-volatile storage medium, and the computer program product is executed by at least one processor to implement the steps of the codebook determination method according to any one of claims 1 to 21 or the steps of the codebook reception method according to any one of claims 24 to 26.

32. A communication device, configured to perform the steps of the codebook determination method according to any one of claims 1 to 21 or the steps of the codebook reception method according to any one of claims 24 to 26.
